# EUROPEAN PATENT APPLICATION

(11) **EP 4 852 525 A1**
(43) Date of publication of application: **09.12.2026**
(21) Application number: 25731946.7
(22) Date of filing: 24.01.2025
(51) Int. Cl.: H04W 40/22, H04W 76/14, H04W 60/00, H04W 40/24, H04W 88/04, H04W 92/18

(54) **MULTI-HOP RELAY METHOD**

(30) Priority: 29.01.2024 US 202463626061 P
(71) Applicant: LG Electronics Inc., Seoul 07336 (KR)
(72) Inventor: KIM, Seokjung, Seoul 06772 (KR); KIM, Laeyoung, Seoul 06772 (KR); BYUN, Daewook, Seoul 06772 (KR); YOUN, Myungjune, Seoul 06772 (KR)
(74) Representative: Maikowski & Ninnemann Patentanwälte Partnerschaft mbB
(86) International application number: PCT/KR2025/001437
(87) International publication number: WO 2025/165104

(57) **Abstract**

The present disclosure provides a method for a particular relay UE to perform communications. The method comprises: allocating a first local ID for the specific relay UE and a second local ID for a remote UE; transmitting, to a next relay UE, the first local ID and the second local ID; wherein the next relay UE is a UE relaying communication between the specific relay UE and the remote UE, receiving, from the remote UE, an RRC setup request message via the next relay UE; performing RRC reconfiguration with a base station; wherein the step of performing the RRC reconfiguration comprises: receiving, from the base station, a third local ID for the remote UE allocated by the base station, performing relay of communication between the base station and the remote UE, based on the second local ID and the third local ID.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL SOLUTION

The relay UE relays communication between the remote UE and the base station by appropriately rewriting the local ID.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show procedures for the first embodiment of this specification.
FIG. 8 shows a first example of SRAP header conversion of the U2N Relay UE according to the first embodiment of the present specification.
FIG. 9 shows a second example of SRAP header conversion of U2N relay UE according to the first embodiment of the present specification.
FIGS. 10, 11, and 12 show procedures for the second embodiment of the present specification.
FIG. 13 shows a first example of SRAP header conversion of U2N Relay UE according to the second embodiment of the present specification.
FIG. 14 shows a second example of SRAP header conversion of U2N Relay UE according to the second embodiment of the present specification.
FIGS. 15, 16, and 17 show procedures for the third embodiment of this specification.
FIG. 18 shows a first example of SRAP header conversion of U2N Relay UE according to the third embodiment of the present specification.
FIG. 19 shows a second example of SRAP header conversion of U2N Relay UE according to the third embodiment of the present specification.
FIG. 20 shows the procedure of the specific relay UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

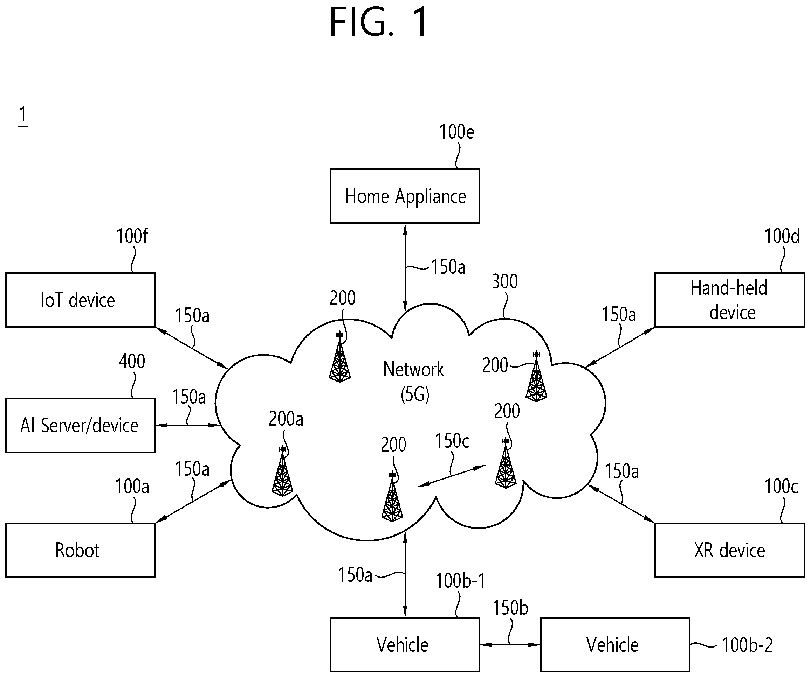

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

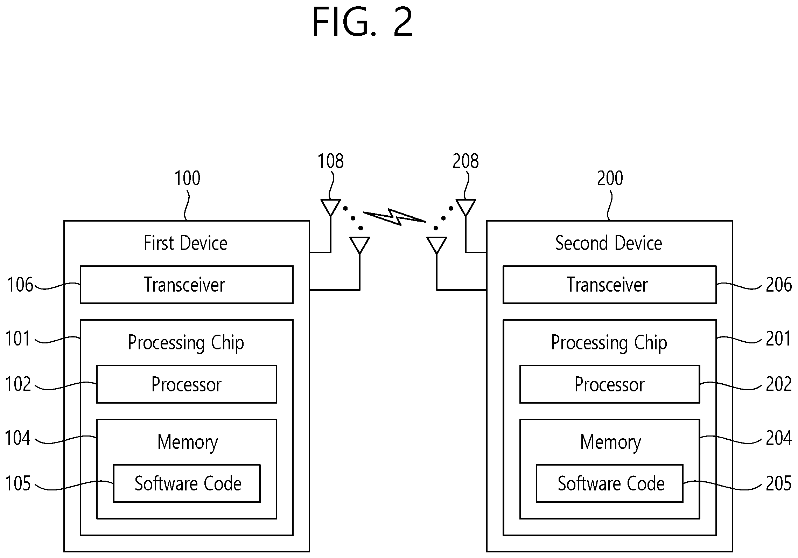

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

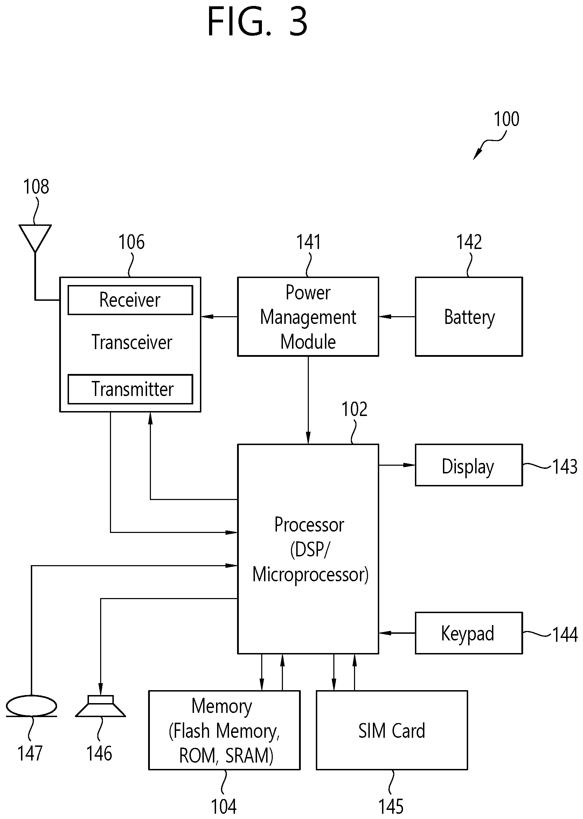

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{TM} series of processors made by Qualcomm^{®}, EXYNOS^{TM} series of processors made by Samsung^{®}, A series of processors made by Apple^{®}, HELIO^{TM} series of processors made by MediaTek^{®}, ATOM^{TM} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

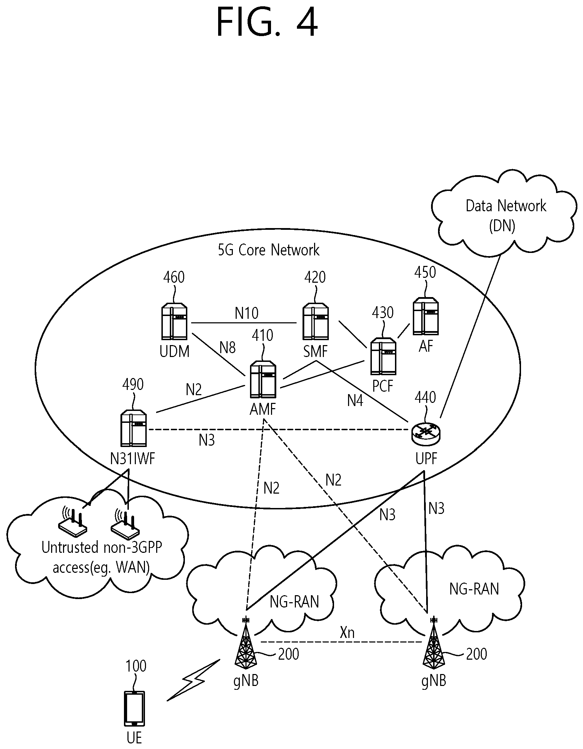

**FIG. 4** **is a block diagram of a next generation cellular network.**

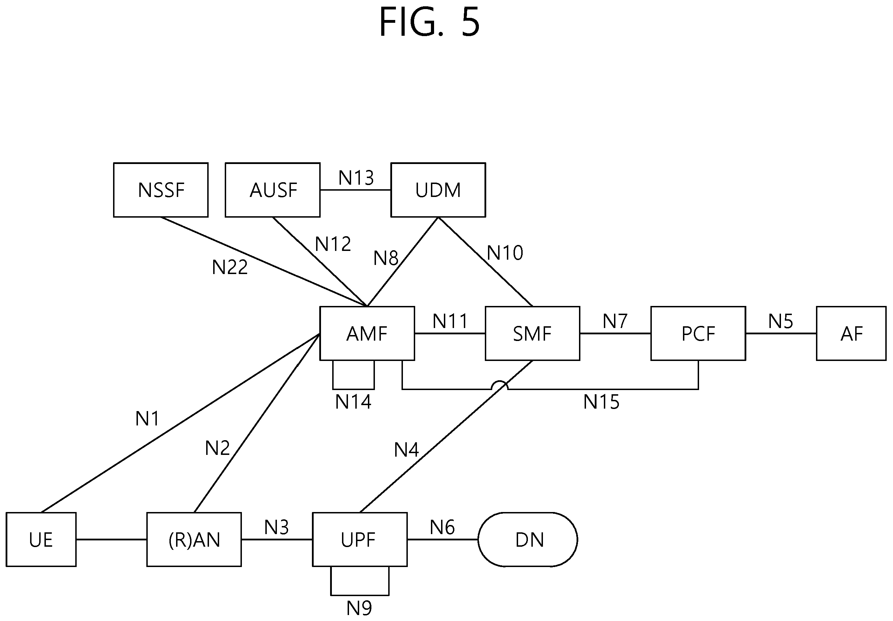

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

Relay UE may relay communication between Remote UE and network.

Communication between Remote UE and network may be relayed by multiple relay UEs.

For example, relay UE#1 and relay UE#2 may relay communication between Remote UE and network.

For example, in case of uplink, remote UE may transmit uplink signal to relay UE#2. Then relay UE#2 may transmit the uplink signal to relay UE#1. Then relay UE#1 may transmit the uplink signal to network.

Multi-hop relaying (Multi-hop UE-to-Network relaying) may be relaying by multiple relay UEs.

A method supporting multi-hop relaying (Multi-hop UE-to-Network relaying) is needed.

For signaling and data transmission/reception between U2N Remote UE and base station, a local ID allocation method may be proposed with respect to U2N Remote UE and n-hop U2N Relay UE (e.g., U2N Relay UE directly connected to base station. or Last hop U2N Relay UE).

A method for a 1-hop U2N Relay UE (e.g., U2N Relay UE directly connected to U2N Remote UE or First hop U2N Relay UE) or an n-hop U2N Relay UE to modify the SRAP header may be proposed.

For routing using SRAP header, a method may be proposed to allocate/configure mapping/routing information to egress PC5/Uu Relay RLC channel for a specific bearer for each U2N Relay UE.

In this specification, UE (User Equipment) and terminal are used interchangeably for description. Also, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE, U2N Relay, U2N Relay UE, etc. are used interchangeably. Also, Remote UE, 5G Remote UE, 5G ProSe Remote UE, U2N Remote UE, etc. are used interchangeably. Also, a UE that is not a UE-to-Network Relay may be referred to as a Remote UE or may be referred to simply as a UE.

In this specification, in order to provide a network connection service to a Remote UE, a U2N Relay located on a path between a Remote UE and a U2N Relay directly connected to a base station may be referred to as an Intermediate U2N Relay.

In this specification, U2N (UE-to-Network) Relay is written for Layer-2 U2N Relay, but can mean all types of UE-to-Network Relay (e.g., Layer-2 UE-to-Network Relay, Layer-3 UE-to-Network Relay). Also, although this specification is written for U2N Relay, the section between U2N Remote UE and the last hop U2N Relay (e.g., U2N Relay directly connected to the base station) is also applicable to multi-hop UE-to-UE relay operation.

This specification mainly describes the proposed content. For ProSe related operations and procedures, refer to TS 23.304 v18.4.0, TS 24.554 v18.3.0, TS 33.536 v17.1.0, TS 33.503 v18.1.0, TS 38.300 v18.0.0, TS 38.401 v18.0.0, TS 38.331 v18.0.0, TS 38.351 v18.0.0, etc.

The proposed method to support multi-hop UE-to-network relaying may be composed of a combination of one or more of the operations/configurations/steps described in this specification.

Some of the NG messages between AMF and NG-RAN described below may be defined and used as new NG messages. Also, some of the RRC messages between NG-RAN and UE described below may be defined and used as new RRC messages.

Some steps in the procedures described below may be performed simultaneously/in parallel, or may be performed in a reversed order.

The names of the indications or parameter information proposed below are examples and may be interpreted as being replaced with other names for the proposed procedure/purpose/method.

The base station of this specification may be a base station serving all UEs (e.g., U2N remote UE, U2N relay UE#1, U2N relay UE#2, U2N relay UE#3) (or a base station RRC-connected to all UEs).

### I. First Embodiment

The following drawings are created to explain specific examples of this specification. The names of specific devices or names of specific signals/messages/fields described in the drawings are presented as examples, and therefore, the technical features of this specification are not limited to the specific names used in the drawings below.

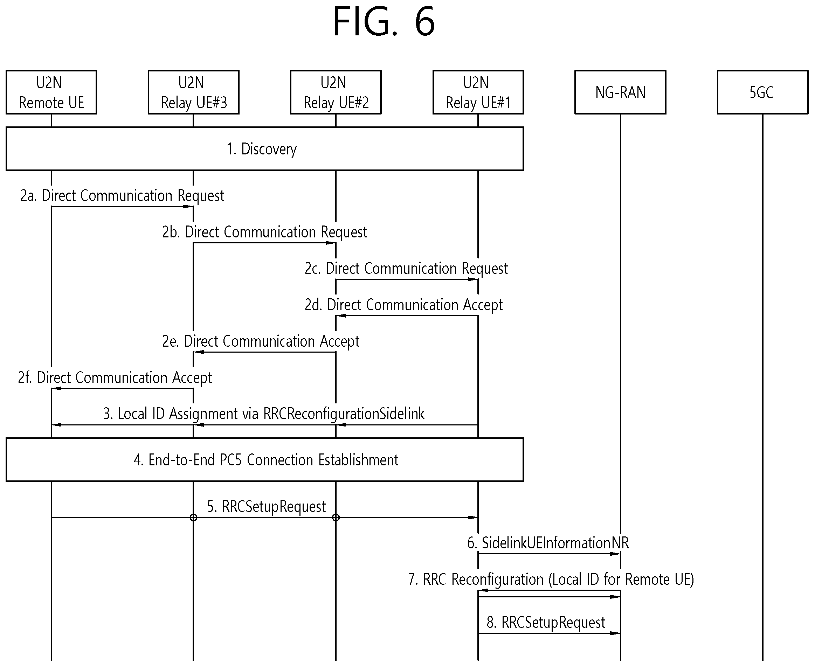

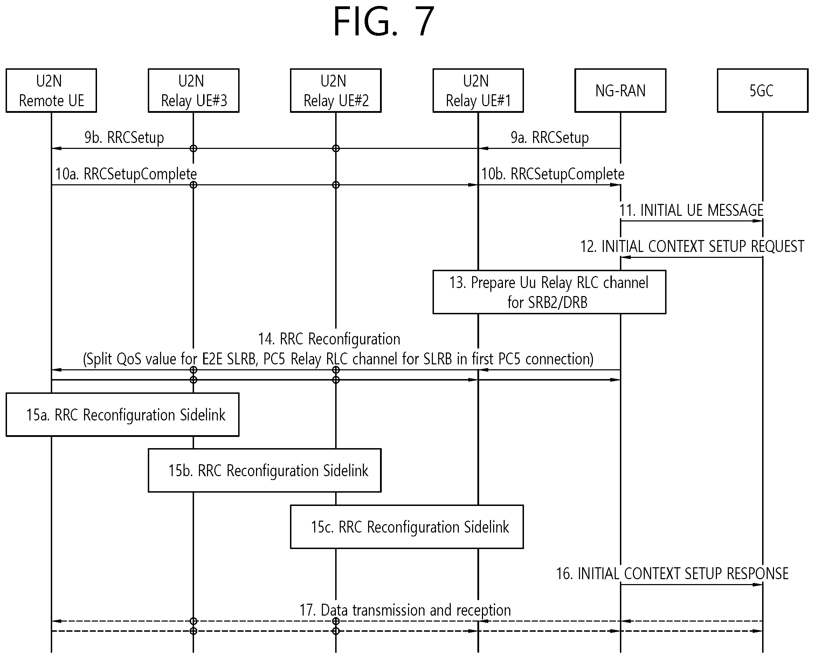

**FIGS. 6** **and** **7** **show procedures for the first embodiment of this specification.**

The content of U2N Relay UE#3 (e.g., 3-hop U2N Relay UE) in this specification may be applied to U2N Relay UE of 4-hop or more hops (e.g., intermediate UE-to-Network Relay UE).

### 1) Step 1

A U2N Remote UE may discover a U2N Relay UE that can provide a connection to a network.

A U2N Remote UE may be connected to a base station through U2N Relay UE#1, U2N Relay UE#2, and U2N Relay UE#3.

A U2N Remote UE may be connected to a network through n U2N Relay UEs (e.g., n-hops).

The content of FIGS. 6 and 7 is explained assuming that 3 relay UEs relay communication between a remote UE and a network. However, the content of FIGS. 6 and 7 may also be applied to a case where n relay UEs relay communication between a remote UE and a network.

In Step 1, the remote UE may receive information about the serving cell of the relay UE (e.g., relay UE#1) and information for accessing the cell. The information may be transmitted directly by relay UE#1 to the remote UE, or may be transmitted indirectly via relay UE#2 (or relay UE#3). The remote UE may use/refer to the information about the serving cell of the relay UE to (re)select the relay UE.

In Step 1, the remote UE may receive information about the serving cell of the relay UE (e.g., relay UE#2 or relay UE#3) and information for accessing the cell.

The contents of TS 23.304 v18.4.0 may be applied to existing input parameters used/transmitted in the discovery process.

Additionally, some or all of the following information may be communicated to the remote UE during the discovery process:
- Number of hops (n): The number of U2N Relay UEs required for the U2N Remote UE to connect to the network
- Information about each node involved in the network connection (e.g., User Info ID) and L2 IDs of each node (e.g., L2 IDs for U2N Remote UE, U2N Relay UE#1, U2N Relay UE#2, U2N Relay UE#3)

### 2) Step 2

The U2N Remote UE may first create a new PC5 connection with the U2N Relay UE#3 or change/update an existing PC5 connection in order to connect to the network.

For example, the Remote UE may send a Direct Communication Request message to the relay UE#3 (Step 2a).

U2N Relay UE#3 may send a Direct Communication Request message to U2N Relay UE#2 (Step 2b).

U2N Relay UE#2 may send a Direct Communication Request message to U2N Relay UE#1 (Step 2c).

U2N Relay UE#1, which receives the Direct Communication Request message, may accept the creation or change/update of PC5 connection with U2N Relay UE#2. In this case, U2N Relay UE#1 may respond with a Direct Communication Accept message to Relay UE#2 (Step 2d).

Similarly, U2N Relay UE#2 may sequentially send a Direct Communication Accept message to U2N Relay UE#3, and U2N Relay UE#3 may sequentially send a Direct Communication Accept message to U2N Remote UE.

Unlike the above-mentioned methods, a unicast link may be formed between U2N Remote UE and U2N Relay(s) in various ways. For example, a unicast link may be formed hop-by-hop (e.g., U2N Remote UE and U2N Relay UE#3 form a unicast link, U2N Relay UE#3 and U2N Relay UE#2 form a unicast link, U2N Relay UE#2 and U2N Relay UE#1 form a unicast link), and U2N Remote UE and U2N Relay UE#1 may form an end-to-end unicast link. This may be applied throughout this specification.

The content of TS 23.304 v18.4.0 may be applied to the input parameters included in the Direct Communication Request/Direct Communication Accept message.

### 3) Step 3

U2N Relay UE#1 may allocate/configure a Local ID pair (e.g., 'local ID for U2N Remote UE' and 'local ID for U2N Relay UE#1' to be included in SRAP ladder) to be used for E2E (End-to-End) PC5 connection with U2N Remote UE.

U2N Relay UE#1 may include the allocated/configured Local ID pair ('local ID for U2N Remote UE' and 'local ID for U2N Relay UE#1') in an RRCReconfigurationSidelink message together with 'L2 ID for U2N Remote UE' and 'L2 ID for U2N Relay UE#1' and transmit it to U2N Relay UE#2. Similarly, U2N Relay UE#2 may transmit Local ID pair information to U2N Relay UE#3, and U2N Relay UE#3 may transmit Local ID pair information to U2N Remote UE through RRCReconfigurationSidelink message along with L2 ID for U2N Remote UE and L2 ID for U2N Relay UE#1. L2 ID for U2N Remote UE and L2 ID for U2N Relay UE#1 may be IDs used in link layer.

It is assumed that U2N Relay UE#1 allocates/configures Local ID pair for U2N Remote UE and U2N Relay UE#1, but it is also possible that U2N Remote UE, U2N Relay UE#2, or U2N Relay UE#3 allocates/configures Local ID pair for U2N Remote UE (and U2N Relay UE#1) and transmits them to each node through RRCReconfigurationSidelink message.

The U2N Relay UE#1 may request the base station to allocate/set a local ID pair for the U2N Remote UE and the U2N Relay UE#1 by performing Step 6 described below immediately after Step 2d. In this case, the base station may allocate/set a local ID pair for the U2N Remote UE and the U2N Relay UE#1 and transmit it by performing an RRC Reconfiguration process to the U2N Relay UE#1. The base station may allocate/set a local ID pair for the U2N Remote UE and the U2N Relay UE#1. The base station may transmit the local ID pair for the U2N Remote UE and the U2N Relay UE#1 allocated/set through the RRC Reconfiguration to the U2N Relay UE#1. U2N Relay UE#1 may transmit the information (Local ID pair for allocated/configured U2N Remote UE and U2N Relay UE#1) to U2N Remote UE through U2N Relay UE#2 and U2N Relay UE#3.

If it is found that a Local ID pair is duplicated/configured in multiple pairs for U2N Remote UE and U2N Relay UE, each node may request the node that allocated/configured the Local ID pair to re-allocate/configure the Local ID pair.

For example, the Local ID value may be INTEGER (0...255) as defined in TS 38.331 v18.0.0. For sidelink SRAP configuration, an integer value between 0 and 255 may be used as the Local ID value (sl-LocalIdentity).

For example, a separate local ID may be defined for the multi-hop U2N Relay operation to distinguish it from the existing single-hop U2U Relay operation or the existing single-hop U2N Relay operation.

### 4) Step 4

The U2N Remote UE may establish an E2E PC5 connection with the U2N Relay UE#1. For this purpose, E2E SL-SRB 0/1/2/3 may be created. E2E SL-SRB 0/1/2/3 may mean the SL-SRB created end-to-end between the U2N Remote UE and the U2N Relay UE#1.

Alternatively, the existing PC5 Relay RLC channel configuration (e.g., SL-RLC0) or a newly defined separate PC5 Relay RLC channel configuration may be used for transmitting/receiving SRB0 messages (e.g., RRCSetupRequest, RRCSetup, etc.) of U2N Remote UE. In this case, the E2E PC5 connection between U2N Remote UE and U2N Relay UE#1 may be created after Step 4.

A separate link ID for the E2E PC5 connection may be assigned during this process. This link ID information may be shared with each U2N Relay UE (e.g., U2N Relay UE#2, U2N Relay UE#3) that connects the E2E PC5 connection.

In this case, even if the U2N Remote UE loses connection with the U2N Relay UE#3, the U2N Remote UE may perform discovery based on other link ID information to connect the lost hop through another U2N Relay UE. Through this, the E2E PC5 connection may not need to be re-established.

### 5) Step 5

The U2N Remote UE may attempt to create an RRC connection by sending an RRCSetupRequest message to the base station (e.g., U2N Relay UE#3, U2N Relay UE#2, U2N Relay UE#1).

In order to deliver the RRCSetupRequest message to the U2N Relay UE#1 via the U2N Relay UE#3 and the U2N Relay UE#2, the U2N Remote UE may include the local ID pair (local ID for the U2N Remote UE and local ID for the U2N Relay UE#1) received in Step 3 in the SRAP header of the RRCSetupRequest message.

For example, the U2N Remote UE may include the local ID for the U2N Remote UE in the UE ID (for SRC) of the SRAP header and the local ID for the U2N Relay UE#1 in the UE ID (for DST) of the SRAP header.

In addition, if an E2E SL-SRB is generated in Step 4, the U2N Remote UE may also include the bearer ID for it in the SRAP header.

For existing input parameters to be included in the SRAP header in Step 5 and the specific operations thereof, the UE-to-UE Relay operation of TS 38.351 v18.0.0 may be applied.

Alternatively, a new SRAP header may be defined for multi-hop U2N relay operation.

### 6) Step 6

U2N Relay UE#1 may request the establishment/creation of a Uu Relay RLC channel for transmitting the RRCSetupRequest received in Step 5 by sending a SidelinkUEInformationNR message to the base station.

During this process, U2N Relay UE#1 may also forward information related to the U2N Remote UE (e.g., information about SL-SRB and/or SL-DRB currently allocated/configured in the E2E PC5 connection).

For the existing input parameters included in the SidelinkUEInformationNR message, refer to TS 38.331 v18.0.0.

To properly route SRAP Data PDU between U2N Remote UE and U2N Relay UE#1, information for mapping/routing each SL-SRB (and SL-DRB) for 'the U2N Remote UE and U2N Relay UE#1 pair' to a specific egress PC5 Relay RLC channel may be assigned/configured to U2N Relay UE#2 (and U2N Relay UE#3). The method for U2N Relay UE#2 and U2N Relay UE#3 to be allocated/configured with the corresponding mapping/routing information (information for mapping/routing each SL-SRB (and SL-DRB) for the U2N Remote UE and U2N Relay UE#1 pair to a specific egress PC5 Relay RLC channel) may be performed via one or more of the following:
- A. In Step 6, U2N Relay UE#1 may transmit the L2 ID of U2N Relay UE#2 and the L2 ID of U2N Relay UE#3 to the U2N base station (e.g., the base station of the Remote UE). Based on this, the base station may allocate/configure the mapping/routing information (mapping/routing information required for U2N Relay #1, U2N Relay UE#2, and U2N Relay UE#3 to route signaling/data of the U2N Remote UE) and transmit it to U2N Relay UE#1. U2N Relay UE#1 may forward this to each U2N Relay UE (U2N Relay UE#2 and U2N Relay UE#3) via RRCReconfigurationSidelink message.
- B. If U2N Relay UE#2 (or U2N Relay UE#3) is in RRC_CONNECTED state, U2N Relay UE#2 (or U2N Relay UE#3) may be allocated/configured the mapping/routing information through each base station to which it is currently RRC connected. In this case, U2N Relay UE#2 (or U2N Relay UE#3) may forward some or all of the following information (i to iii) for the U2N Remote UE and U2N Relay UE#1 pair to the base station: i. Information about SL-SRB and/or SL-DRB currently allocated/created for U2N Remote UE and U2N Relay UE#1 pair (e.g., Bearer ID, RLC Channel ID, etc.); ii. L2 IDs and/or Local IDs for U2N Remote UE and U2N Relay UE#1 pair; iii. Information about U2N Relay UEs located between U2N Remote UE and U2N Relay UE#1 pair (e.g., L2 ID(s) for each U2N Relay UE(s), etc.)).
- C. If U2N Relay UE#2 (or U2N Relay UE#3) is in RRC_IDLE (or RRC_INACTIVE) state, U2N Relay UE#2 (or U2N Relay UE#3) may receive the mapping/routing information via SIB. Alternatively, U2N Relay UE#2 (or U2N Relay UE#3) may be (pre-)configured with the above mapping/routing information. Alternatively, while U2N Relay UE#2 (or U2N Relay UE#3) is in RRC_CONNECTED state, U2N Relay UE#2 (or U2N Relay UE#3) may store the mapping/routing information most recently allocated from the base station and continue to use it.
- D. Based on the link ID for the E2E PC5 connection, each U2N Relay UE may perform routing using the mapping information for the next hop U2N relay UE/N2N Remote UE.

For a connection between a U2N Remote UE and a U2N Relay UE#3, routing information based on L2 ID pairs (e.g., L2 ID for U2N Remote UE and L2 ID for U2N Relay UE#3) for the connection between the U2N Remote UE and the U2N Relay UE#3 may be set to the U2N Remote UE (and/or the U2N Relay UE#3). Based on this, communication (or relaying) in the connection between the U2N Remote UE and the U2N Relay UE#3 may be performed.

Alternatively, routing information based on link IDs for the E2E PC5 connection (e.g., L2 ID for the U2N Remote UE and/or L2 ID for the U2N Relay UE#1) may be set to each of the UEs (e.g., U2N Remote UE, U2N Relay UE#3, U2N Relay UE#2, U2N Relay UE#1). Based on this, communication (or relay) can be performed at each hop (e.g., connection between U2N Remote UE and U2N Relay UE#3, connection between U2N Relay UE#3 and U2N Relay UE#2, connection between U2N Relay UE#2 and U2N Relay UE#1).

### 7) Step 7

The base station of the U2N Remote UE may forward some or all of the following information to the U2N Relay UE#1 via the RRCReconfiguration message so that the data and signaling of the U2N Remote UE can be routed:
- A. A new local ID for the U2N Remote UE to distinguish/identify the U2N Remote UE on the Uu link or Uu Relay RLC channel between the U2N Relay UE#1 and the base station
- B. Information on the Uu Relay RLC channel configuration required to transmit the SRB0/1 message for the U2N Remote UE
- C. Information on mapping/routing SRAP Data PDU transmitted over SRB and DRB for DL traffic (e.g., U2N Remote UE side) (and SRAP Data PDUs transmitted over SL-SRB and SL-DRB for UL traffic (e.g., base station side)) to a specific egress PC5/Uu Relay RLC channel. Or information for mapping/routing SRAP Data PDU transmitted through ingress PC5/Uu Relay RCL channel for a specific BEARER ID to a specific egress Uu/PC5 Relay RLC channel

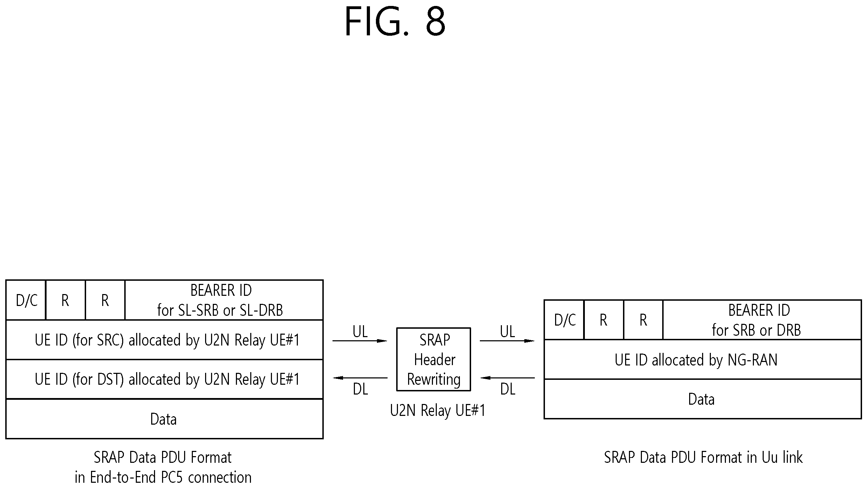

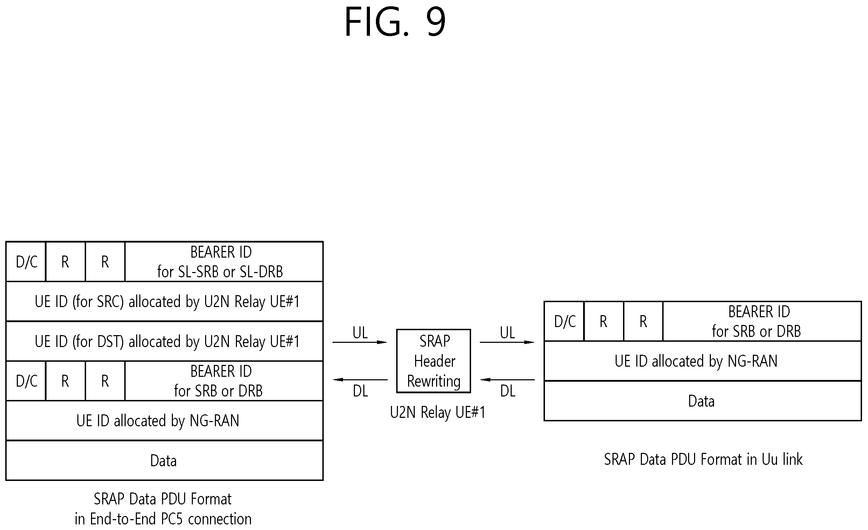

After that, based on the new local ID for U2N Remote UE included in the RRCReconfiguration message (RRCReconfiguration message received from the base station) and the local ID pair allocated/configured in Step 3, U2N Relay UE#1 may perform conversion (or addition) operation for SRAP header between U2N Remote UE and base station as shown in Fig. 8 (or Fig. 9).

For example, in case of DL data, the base station may include i) the local ID allocated/configured in Step 7 (new local ID for U2N Remote UE) and ii) the bearer ID for SRB (or DRB) in the SRAP header and transmit it to U2N Relay UE#1.

Based on the content of the SRAP header sent by the base station, the U2N Relay UE#1 may identify that the DL data is for the U2N Remote UE. In addition, the U2N Relay UE#1 may include a local ID pair to be used for the E2E PC5 connection in the SRAP header (the U2N Relay UE#1 may change/convert (rewrite) the SRAP header of the DL data from the new local ID for the U2N Remote UE included by the base station to the local ID for the U2N Remote UE allocated in Step 3).

In addition, based on the bearer ID included in the SRAP header sent by the base station, the U2N Relay UE#1 may change the bearer ID (bearer ID for SRB/DRB) included by the base station to a bearer ID (bearer ID for the corresponding SL-SRB (or SL-DRB) in the E2E PC5 connection) and include it in the SRAP header.

For example, in the case of UL data, the U2N Remote UE may include, in the SRAP header, the local ID pair (local ID for the U2N Remote UE and local ID for the U2N Relay UE) allocated/configured in Step 3 and the bearer ID for the SL-SRB (or SL-DRB) used for the current E2E PC5 connection. And, the U2N Remote UE may transmit the SRAP header to the U2N Relay UE#1. Based on this, the U2N Relay UE#1 may include, in the SRAP header of the UL data, the bearer ID for the SRB (and DRB) corresponding to the local ID (new local ID for the U2N Remote UE) allocated/configured in Step 7 and the bearer ID for the SL-SRB (or SL-DRB) (the U2N Relay UE#1 may convert (rewrite) the contents included in the existing header to the corresponding bearer ID). And, the U2N Relay UE#1 may transmit the SRAP header of the UL data to the base station.

**FIG. 8** **shows a first example of SRAP header conversion of the U2N Relay UE according to the first embodiment of the present specification.**

As shown in FIG. 8, the U2N Relay UE may rewrite the SRAP header.

The left part of FIG. 8 shows an example of SRAP data used for PC5 connection between remote UE and relay UE#1.

For UL data, UE ID (for SRC) may be a local ID for remote UE assigned in Step 3. For UL data, UE ID (for DST) may be a local ID for relay UE#1 assigned in Step 3. For UL data, the header of SRAP data used for End-to-End PC5 connection may include bearer ID (bearer ID for sidelink) for SL-SRB (or SL-DRB).

For DL data, UE ID (for SRC) may be a local ID for relay UE#1 assigned in Step 3. For DL data, UE ID (for DST) may be a local ID for remote UE assigned in Step 3. For DL data, the header of SRAP data used in End-to-End PC5 connection may include a bearer ID (bearer ID for sidelink) for SL-SRB (or SL-DRB).

The right part of FIG. 8 shows an example of SRAP data used for Uu connection between relay UE#1 and base station. For UL data, UE ID (allocated by NG-RAN) may be a local ID for remote UE allocated in Step 7. For DL data, UE ID (allocated by NG-RAN) may be a local ID for remote UE allocated in Step 7. The header of SRAP data used in Uu link may include a bearer ID for SRB (or DRB) (bearer ID for Uu link).

**FIG. 9** **shows a second example of SRAP header conversion of U2N relay UE according to the first embodiment of the present specification.**

As shown in FIG. 9, U2N relay UE may rewrite SRAP header.

For DL traffic/data, for transmission on E2E PC5 connection (connection between U2N Remote UE and U2N Relay UE#1), U2N Relay UE#1 may add the following information to the existing SRAP header (SRAP Data PDU) of DL data sent by the base station and transmit it to U2N Remote UE:
- Local ID pair allocated/configured by U2N Relay UE#1 in Step 3 (Local ID for relay UE#1 in UE ID (for SRC), Local ID for remote UE in UE ID (for DST))
- Bearer ID for SL-SRB (or SL-DRB) used for current E2E PC5 connection

For example, U2N Relay UE#1 may add the SRAP header including the above-mentioned information to the SRAP of existing DL data.

The U2N Remote UE that receives the DL data may remove two SRAP headers (the SRAP header added by the base station to the DL data and the SRAP header added by the relay UE#1 to the DL data).

For UL traffic/data, the U2N Remote UE may first configure the SRAP header (the local ID for the remote UE allocated/configured by the base station in Step 7 and the bearer ID for the SRB (or DRB)) to be used in the Uu link. The U2N Remote UE may include the local ID allocated/configured by the base station in Step 7 in the SRAP header. Then, the U2N Remote UE may add the SRAP header for the E2E PC5 connection (the local ID pair allocated/configured in Step 3 and the bearer ID for the SL-SRB (or SL-DRB) currently used for the E2E PC5 connection) and forward it to the U2N Relay UE#1. U2N Relay UE#1 may remove only the SRAP header for E2E PC5 connection (Local ID pair allocated/configured in Step 3 and Bearer ID for SL-SRB (or SL-DRB) used for current E2E PC5 connection) and transmit it to the base station through Uu Relay RLC channel (Uu Relay RLC channel established through Step 6 and Step 7).

In order to perform the above-described operation, the base station may also transmit the Local ID information for U2N Remote UE allocated by the base station in Step 7 to U2N Remote UE in Step 9.

In order to perform the above-described operation, the base station may explicitly inform U2N Relay UE#1 of the mapping information between SL-SRB (and/or SL-DRB) and SRB (and/or DRB) for a specific U2N Remote UE.

Alternatively, based on the information obtained in Step 4 and Step 7, Step 13, U2N Relay UE#1 may also determine/configure bearer mapping information between E2E PC5 connection and Uu link by itself.

Instead of the base station separately allocating/configuring a local ID for the U2N Remote UE, the base station may also use the local ID allocated/configured for the U2N Remote UE in Step 3 for the Uu link. To this end, in Step 6, U2N Relay UE#1 may transmit the local ID currently allocated/configured for the U2N Remote UE to the base station.

If the base station of the U2N Remote UE is split into CU-DU (for example, divided into gNB-CU and gNB-DU), the gNB-CU may transmit the local ID for the U2N Remote UE transmitted by U2N Relay UE#1 to the gNB-DU. If the base station (e.g., gNB-CU) determines that the local ID for the U2N Remote UE received in Step 6 is already allocated/configured for another U2N Remote UE currently connected to the base station, the base station (e.g., gNB-CU) may allocate a new local ID for the U2N Remote UE and then transmit it to the U2N relay UE (and/or U2N remote UE) through Step 9. In this process, the U2N Relay UE#1 may notify the U2N Relay UE#2 and U2N Relay UE#3 that the local ID for the U2N Remote UE has been changed through the RRCReconfigurationSidelink message as in Step 3.

Alternatively, the local ID allocated/configured by the base station for the U2N Remote UE in Step 7 may be used in the E2E PC5 connection. For this purpose, the base station may include the local ID allocated/configured by the base station in the RRCSetup message and transmit it to the U2N Remote UE in Step 9. Then, U2N Remote UE or U2N Relay UE#1 may notify U2N Relay UE#2, U2N Relay UE#3 that the local ID for U2N Remote UE has changed through the RRCReconfigurationSidelink message as in Step 3.

### 8) Step 8

U2N Relay UE#1 may transmit the RRCSetupRequest message received in Step 5 to the base station through the Uu Relay RLC channel allocated/configured in Step 7.

At this time, U2N Relay UE#1 may include the local ID for U2N Remote UE received in Step 7 and the bearer ID of SRB0 in the SRAP header of the RRCSetupRequest message. Through this, the base station may distinguish/identify the U2N Remote UE.

### 9) Step 9

The base station may determine to create an RRC connection with the U2N Remote UE. In this case, the base station may send an RRCSetup message to respond to the U2N Remote UE. During this process, the U2N Relay UE#1 may modify/rewrite the SRAP header of the RRCSetup message sent by the base station into a form suitable for E2E PC5 connection and transmit it to the U2N Remote UE through U2N Relay UE#2 and U2N Relay UE#3.

The base station may include, in the RRCSetup message, information that the U2N Remote UE will use to map/route each SL-SRB (and SL-DRB) to a specific egress PC5 Relay RLC channel in the first PC5 connection between the U2N Remote UE and the U2N Relay UE#3.

### 10) Step 10

The U2N Remote UE may transmit an RRCSetupComplete message to the base station (U2N Relay UE#3, U2N Relay UE#2, U2N Relay UE#1).

The U2N Remote UE may perform allocation/configuration of bearers to be used in the RRC connection with the base station according to the RRCSetup message received in Step 9. Then, the U2N Remote UE may transmit an RRCSetupComplete message to the base station to inform the allocation/configuration of the bearers allocated/configured for the RRC connection.

The U2N Remote UE may include a Registration Request message in the RRCSetupComplete message for registration with the network.

In this process, the U2N Relay UE#1 may modify/rewrite the SRAP header of the received RRCSetupComplete message into a form suitable for transmitting an SRB1 message and transmit it to the base station.

### 11) Step 11

The base station may transmit the registration request message received in Step 10 to the 5GC (e.g., AMF) via the NGAP INITIAL UE message. The NGAP INITIAL UE message may include an indication that the U2N Remote UE has connected via the multi-hop U2N relay.

### 12) Step 12

In order for the 5GC (e.g., AMF) to notify the UE of registration acceptance and for the base station to create a UE context, the 5GC (e.g., AMF) may transmit the NGAP INITIAL CONTEXT SETUP REQUEST message including the registration acceptance message to the base station.

At this time, the 5GC (e.g., AMF) may also inform the base station whether the multi-hop U2N relay operation is authorized for the U2N Remote UE.

### 13) Step 13

Based on the information received from the AMF in Step 12, the base station may decide to additionally create (or allocate) SRB2 (and/or DRB) to transmit and receive data (and/or signaling) with the U2N Remote UE. In this case, the base station may additionally create (or allocate) SRB2 (and/or DRB).

In this case, the base station may initiate an RRC Reconfiguration process toward the U2N Relay UE#1 to additionally allocate (or create) a Uu Relay RLC channel. The Uu Relay RLC channel may be used to transmit SRB2 (and/or DRB) between the U2N Relay UE#1 and the base station.

In this process, the base station may transmit information related to this to the U2N Relay UE#1 so that the U2N Relay UE#1 can appropriately map/route the SRB2 (and/or DRB) additionally allocated (or created) by the base station to the SL-SRB (and/or SL-DRB) in the E2E PC5 connection.

### 14) Step 14

The base station may request the U2N Remote UE to create an SL-SRB (and/or SL-DRB) for transmitting and receiving signaling (and/or data) through the RRC Reconfiguration process. For this purpose, the base station may allocate/configure PDCP and SDAP configurations for the SL-SRB (and/or SL-DRB).

In addition, the base station may perform QoS split for the E2E PC5 connection and the Uu link. The base station may allocate/configure split QoS values for the E2E PC5 connection and the Uu link.

And, the base station may transfer the split QoS value (e.g., PDB) allocated/configured for the E2E PC5 connection (e.g., E2E SLRB) to the U2N Remote UE.

Instead of the base station transferring the split QoS value to the U2N Remote UE, the base station may also transfer the split QoS value to the U2N Relay UE#1 in Step 13. In this case, Step 15 may be started from the U2N Relay UE#1. In addition, based on the A information (L2 ID of the U2N Relay UE#2 and L2 ID of the U2N Relay UE#3) of Step 6, the base station may allocate/configure the PC5 Relay RLC channel for the SLRB (e.g., SL-SRB and/or SL-DRB) in the PC5 connection (e.g., the first PC5 connection) between the U2N Remote UE and the U2N Relay UE#3. In this case, the base station may transmit information about the PC5 Relay RLC channel (the PC5 Relay RLC channel for the first PC5 connection) to the U2N Remote UE (via multiple U2N Relay UEs).

Based on the A information (L2 ID of U2N Relay UE#2 and L2 ID of U2N Relay UE#3) of step 6, the base station may allocate the PC5 Relay RLC channel for the SLRB in the PC5 connection (e.g., the second PC5 connection) between U2N Relay UE#3 and U2N Relay UE#2. In this case, the base station may transmit information about the PC5 Relay RLC channel (the PC5 Relay RLC channel for the second PC5 connection) to the U2N Remote UE (via multiple U2N Relay UEs).

The Split QoS value allocated/configured for the Uu link may be delivered to the U2N Relay UE#1 in Step 13.

### 15) Step 15

If the U2N Remote UE receives the Split QoS value (e.g., PDB) allocated/configured for the E2E PC5 connection (e.g., E2E SLRB) in Step 14, the U2N Remote UE may split the Split QoS value and allocate/configure it for each PC5 connection up to the U2N Relay UE#1.

For example, the U2N Remote UE may assign and set each Split QoS value for the following PC5 connections by referring to the values assigned/set from the base station:
- PC5 connection between U2N Remote UE and U2N Relay UE#3 (e.g., the first PC5 connection)
- PC5 connection between U2N Relay UE#3 and U2N Relay UE#2 (e.g., the second PC5 connection)
- PC5 connection between U2N Relay UE#2 and U2N Relay UE#1 (e.g., the third PC5 connection)

### 15a) Step 15a

In Step 14, if the U2N Remote UE receives information about the PC5 Relay RLC channel for SLRB in the PC5 connection between U2N Remote UE and U2N Relay UE#3 (e.g., the first PC5 connection) from the base station, U2N Remote UE may transmit information about PC5 Relay RLC channel for SLRB to U2N Relay UE#3 through RRC Reconfiguration Sidelink process. U2N Relay UE#3 may allocate/create PC5 Relay RLC channel based on this.

### 15b) Step 15b

If U2N Relay UE#3 is in RRC_CONNECTED state, U2N Relay UE#3 may request PC5 Relay RLC channel allocation/configuration for SLRB in PC5 connection (e.g., second PC5 connection) between U2N Relay UE#3 and U2N Relay UE#2 through base station with which current RRC connection is established. In this process, U2N Relay UE#3 may also transmit Split QoS value allocated/configured by U2N Remote UE to base station.

If U2N Relay UE#3 is in RRC_IDLE (or RRC_INACTIVE) state, U2N Relay UE#3 may utilize PC5 Relay RLC channel configuration (pre-)configured in U2N Relay UE#3.

Alternatively, if U2N Relay UE#3 is in RRC_IDLE (or RRC_INACTIVE) state, U2N Relay UE#3 may be allocated/set up a PC5 Relay RLC channel for SLRB in the PC5 connection (e.g., the second PC5 connection) between U2N Relay UE#3 and U2N Relay UE#2 from the base station to which U2N Remote UE is RRC connected through Step 14.

U2N Relay UE#3 may also inform U2N Relay UE#2 about the PC5 Relay RLC channel (e.g., PC5 Relay RLC channel for SLRB in the second PC5 connection) through RRC Reconfiguration Sidelink process so that it can perform allocation/configuration for the PC5 Relay RLC channel in the second PC5 connection.

### 15b) Step 15c

Same as Step 15b, U2N Relay UE#2 may perform PC5 Relay RLC channel allocation/configuration for PC5 connection (e.g., 3rd PC5 connection) between U2N Relay UE#2 and U2N Relay UE#1.

If in Step 14, the base station has transmitted Split QoS value (e.g., PDB) allocated/configured for E2E PC5 connection (e.g., E2E SLRB) to U2N Relay UE#1, Step 15a may be initiated from U2N Relay UE#1.

### 16) Step 16

The base station may send NGAP INITIAL CONTEXT SETUP RESPONSE message to AMF to inform that the base station has successfully completed creation of UE context.

### 17) Step 17

UL/DL data may be transmitted through U2N Relay UE#1, U2N Relay UE#2, and U2N Relay UE#3.

If the serving base station of U2N Remote UE (or U2N Relay UE#2 or U2N Relay UE#3) is split into CU-DU (e.g., divided into gNB-CU and gNB-DU), gNB-CU may provide gNB-DU with relevant information (e.g., information about SRBs (and/or DRBs) allocated/configured in Uu link, information about SL-SRBs (and/or SL-DRBs) allocated/configured in current E2E PC5 connection, local ID for U2N Remote UE, split QoS value, etc.). And, gNB-CU may request gNB-DU to allocate/setup Uu Relay RLC channel configuration on Uu link or PC5 Relay RLC channel configuration for SLRB on each PC5 connection.

### II. Second embodiment

The following drawings are created to explain specific examples of the present specification. The names of specific devices or specific signals/messages/fields described in the drawings are presented as examples, and therefore, the technical features of the present specification are not limited to the specific names used in the following drawings.

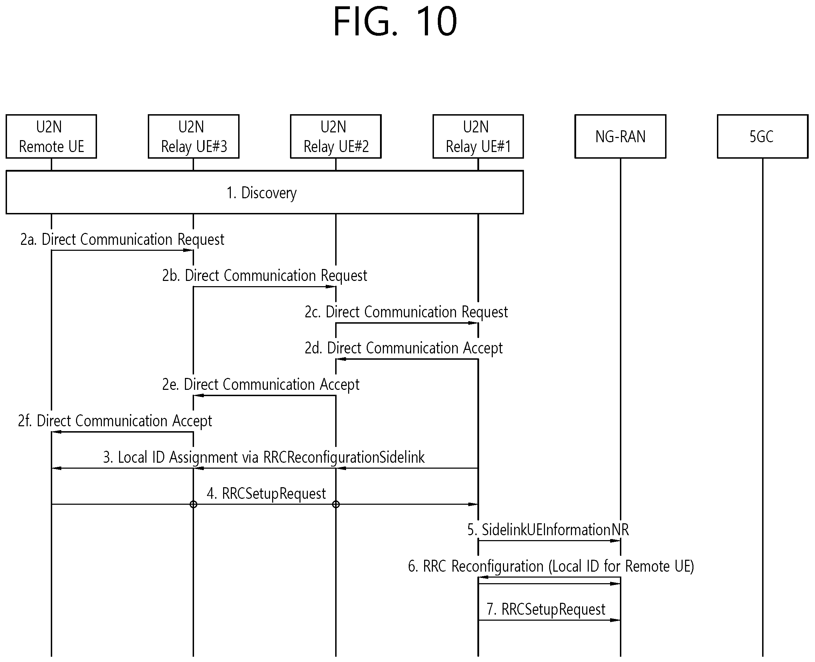

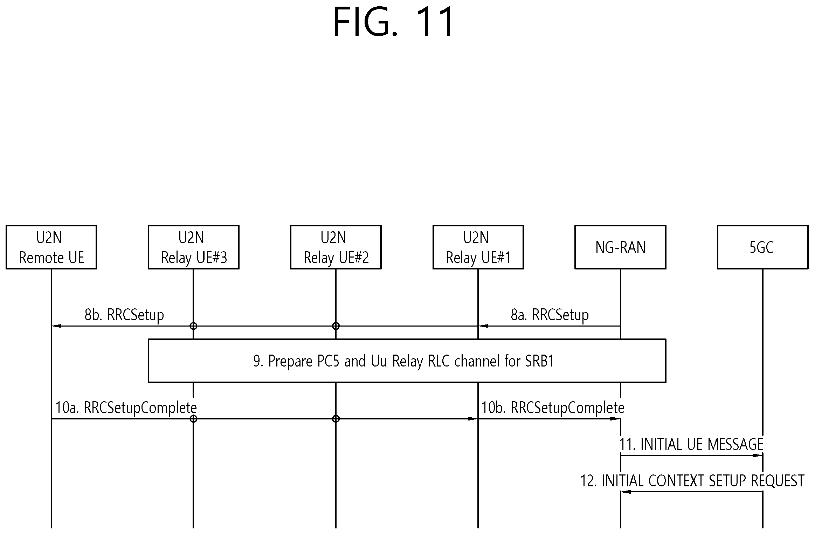

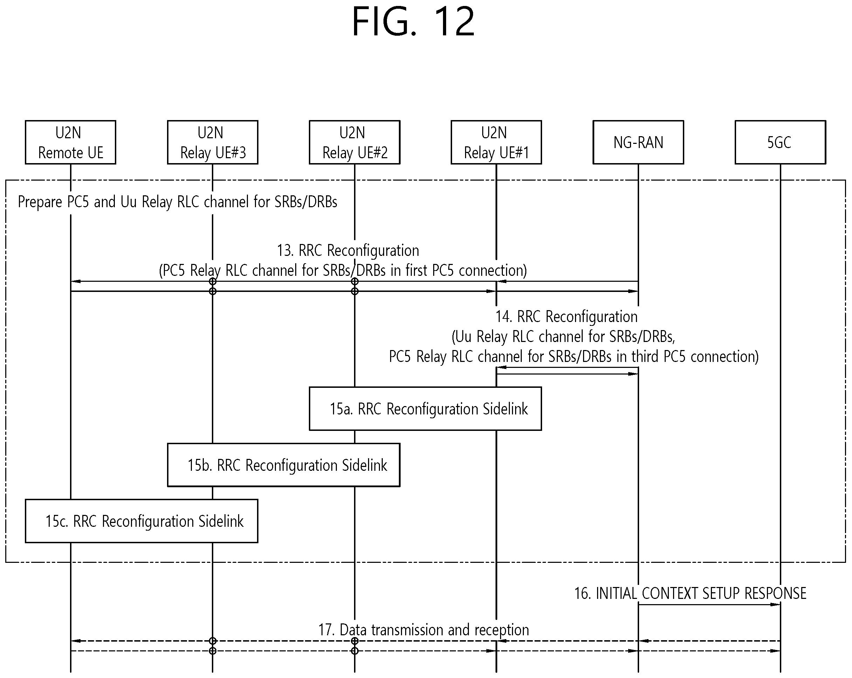

**FIGS. 10****,** **11****, and** **12** **show procedures for the second embodiment of the present specification.**

The contents of the U2N Relay UE#3 (e.g., 3-hop U2N Relay UE) in the present specification may be applied to U2N Relay UEs of 4-hop or more hops (e.g., intermediate UE-to-Network Relay UE).

### 1~2) Step 1 to Step 2

The contents of Figures 6 and 7 may be applied.

### 3) Step 3

U2N Relay UE#1 may allocate/configure a local ID pair (e.g., local ID for U2N Remote UE to be included in SRAP header and local ID for U2N Relay UE#1) to be used in PC5 connection with U2N Remote UE.

U2N Relay UE#1 may include, in an RRCReconfigurationSidelink message, the allocated/configured local ID pair (e.g., local ID for U2N Remote UE to be included in SRAP header and local ID for U2N Relay UE#1) along with L2 ID for U2N Remote (L2 ID for U2N Remote UE) and L2 ID for U2N Relay UE#1 (L2 ID for U2N Relay UE#1) and send it to U2N Relay UE#2.

Similarly, U2N Relay UE#2 may transmit the local ID pair information to U2N Relay UE#3, and U2N Relay UE#3 may transmit the local ID pair information to U2N Remote UE via RRCReconfigurationSidelink message. For details, Step 3 of the FIG. 6 and FIG. 7 may be applied.

### 4) Step 4

U2N Remote UE may attempt to create RRC connection by sending RRCSetupRequest message toward the base station (e.g., U2N Relay UE#3, U2N Relay UE#2, U2N Relay UE#1).

In order to transmit the RRCSetupRequest message to U2N Relay UE#1 via U2N Relay UE#3 and U2N Relay UE#2, U2N Remote UE may include, in SRAP header of the RRCSetupRequest message, local ID pair (local ID for U2N Remote UE and local ID for U2N Relay UE#1) received in Step 3.

For example, a U2N Remote UE may include the local ID for the U2N Remote UE in the UE ID (for SRC) of the SRAP header and the local ID for the U2N Relay UE#1 in the UE ID (for DST) of the SRAP header.

In addition, a U2N Remote UE may also include the BEARER ID for SRB0 in the SRAP header.

In Step 4, the UE-to-UE Relay operation of TS 38.351 v18.0.0 may be applied to the existing input parameters to be included in the SRAP header and the specific operations thereof.

Alternatively, a new SRAP header may be defined for multi-hop U2N relay operation.

In addition, the existing PC5 Relay RLC channel configuration (e.g., SL-RLC0) may be used for transmitting and receiving SRB0 messages (e.g., RRCSetupRequest, RRCSetup, etc.) of U2N Remote UE. Alternatively, a separate PC5 Relay RLC channel configuration for multi-hop U2N relay operation may be newly defined.

### 5) Step 5

U2N Relay UE#1 may request the establishment/creation of a Uu Relay RLC channel for transmitting the RRCSetupRequest received in Step 4 by sending a SidelinkUEInformationNR message to the base station.

For the existing input parameters included in the SidelinkUEInformationNR message, refer to TS 38.331 v18.0.0.

To properly route SRAP Data PDU between U2N Remote UE and U2N Relay UE#1, information for mapping/routing each SL-SRB (and SL-DRB) for 'the U2N Remote UE and U2N Relay UE#1 pair' to a specific egress PC5 Relay RLC channel may be assigned/configured to U2N Relay UE#2 (and U2N Relay UE#3). The method for U2N Relay UE#2 and U2N Relay UE#3 to be allocated/configured with the corresponding mapping/routing information (information for mapping/routing each SL-SRB (and SL-DRB) for the U2N Remote UE and U2N Relay UE#1 pair to a specific egress PC5 Relay RLC channel) may be performed via one or more of the following:
- A. In Step 6, U2N Relay UE#1 may transmit the L2 ID of U2N Relay UE#2 and the L2 ID of U2N Relay UE#3 to the U2N base station (e.g., the base station of the Remote UE). Based on this, the base station may allocate/configure the mapping/routing information (mapping/routing information required for U2N Relay #1, U2N Relay UE#2, and U2N Relay UE#3 to route signaling/data of the U2N Remote UE) and transmit it to U2N Relay UE#1. U2N Relay UE#1 may forward this to each U2N Relay UE (U2N Relay UE#2 and U2N Relay UE#3) via RRCReconfigurationSidelink message.
- B. If U2N Relay UE#2 (or U2N Relay UE#3) is in RRC_CONNECTED state, U2N Relay UE#2 (or U2N Relay UE#3) may be allocated/configured mapping/routing information (information for mapping/routing each SRB and DRB for U2N Remote UE and U2N Relay UE#1 pair to a specific egress PC5 Relay RLC channel) through each base station to which it is currently RRC connected. In this case, U2N Relay UE#2 (or U2N Relay UE#3) may transmit some or all of the following information (i to iii) for U2N Remote UE and U2N Relay UE#1 pair to the corresponding base station: i. Information about SRB and/or DRB currently allocated/created for U2N Remote UE and U2N Relay UE#1 pair (e.g., Bearer ID, RLC Channel ID, etc.); ii. L2 IDs and/or Local IDs for U2N Remote UE and U2N Relay UE#1 pair; iii. Information about U2N Relay UEs located between U2N Remote UE and U2N Relay UE#1 pair (e.g., L2 ID(s) for each U2N Relay UE(s), etc.)).
- C. If U2N Relay UE#2 (or U2N Relay UE#3) is in RRC_IDLE (or RRC_INACTIVE) state, U2N Relay UE#2 (or U2N Relay UE#3) may receive the mapping/routing information via SIB. Alternatively, U2N Relay UE#2 (or U2N Relay UE#3) may be (pre-)configured with the above mapping/routing information. Alternatively, while U2N Relay UE#2 (or U2N Relay UE#3) is in RRC_CONNECTED state, U2N Relay UE#2 (or U2N Relay UE#3) may store the mapping/routing information most recently allocated from the base station and continue to use it.

### 6) Step 6

The base station may transmit some or all of the following information to the U2N Relay UE#1 via the RRCReconfiguration message so that it can route data and signaling of the U2N Remote UE:
- A. A new local ID for the U2N Remote UE to distinguish/identify the U2N Remote UE on the Uu link or Uu Relay RLC channel between the U2N Relay UE#1 and the base station
- B. Information on the Uu Relay RLC channel configuration required to transmit the SRB0/1 message for the U2N Remote UE
- C. Information for mapping/routing each SRAP Data PDU belonging to SRB0/1 to a specific egress Uu/PC5 Relay RLC channel. Or, information for mapping/routing a SRAP Data PDU transmitted through a specific ingress PC5/Uu Relay RLC channel for SRB0/1 to a specific egress Uu/PC5 Relay RLC channel.

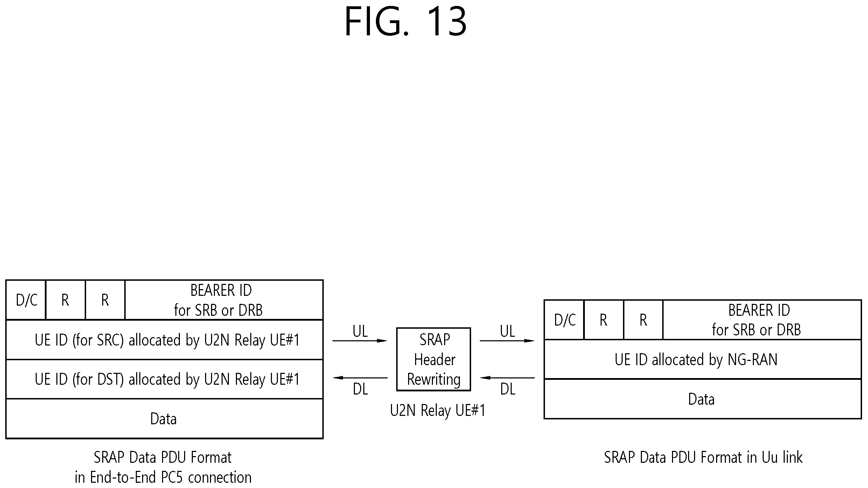

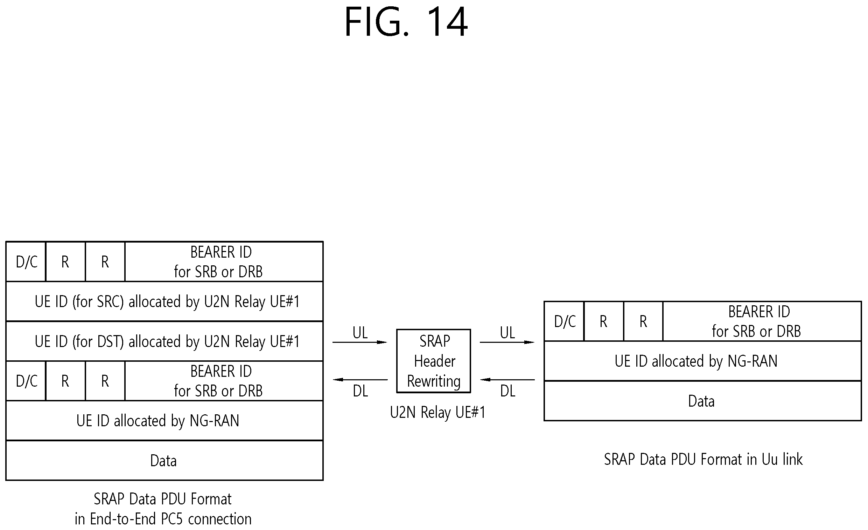

After this, based on the new local ID for the U2N Remote UE included in the RRCReconfiguration message (the RRCReconfiguration message received from the base station) and the local ID pair allocated/configured in Step 3, the U2N Relay UE#1 may perform a conversion (or addition) (rewriting) operation for the SRAP header between the U2N Remote UE and the base station as shown in FIG. 13 (or FIG. 14).

For example, in FIG. 13, for UL data, the U2N Remote UE may include, in the SRAP header, i) the local ID (local ID for the U2N Remote UE) allocated/configured in Step 3 and ii) the bearer ID for the SRB (or DRB) and transmit it to the U2N Relay UE#1. Based on the content of the SRAP header sent by the U2N Remote UE, the U2N Relay UE#1 may identify that the corresponding UL data is for the U2N Remote UE. And, U2N Relay UE#1 may include the local ID pair to be used in the section between the base station and U2N Relay UE#1 in the SRAP header. For example, U2N Relay UE#1 may change/convert (rewrite) the SRAP header of UL data to i) the local ID for U2N Remote UE allocated by the base station in step 6 (new local ID for U2N Remote UE) and ii) the bearer ID for SRB (or DRB).

For example, in FIG. 13, for DL data, the base station may include i) the local ID allocated/configured in step 6 (new local ID for U2N Remote UE) and ii) the bearer ID for SRB (or DRB) in the SRAP header and transmit it to U2N Relay UE#1. Based on the contents of the SRAP header sent by the base station, U2N Relay UE#1 may identify that the corresponding DL data is for U2N Remote UE. And, U2N Relay UE#1 may include, in the SRAP header, the local ID pair to be used in the section between U2N Remote UE and U2N Relay UE#1. For example, U2N Relay UE#1 may change/translate (rewrite) the SRAP header of DL data from the new local ID for U2N Remote UE included by the base station to the local ID for U2N Remote UE allocated in Step 3.

Also, U2N Relay UE#1 may include the bearer ID sent by the base station in the SRAP header.

For example, in case of UL data, U2N Remote UE may include the local ID pair allocated/configured in Step 3 (local ID for U2N Remote UE and local ID for U2N Relay UE) and the bearer ID for the SRB (or DRB) used to send the current data (and/or signaling) in the SRAP header and transmit it to U2N Relay UE#1. Based on this, U2N Relay UE#1 may include the local ID (new local ID for U2N Remote UE) allocated/configured in Step 6 and bearer ID for SRB (or DRB) in the SRAP header of the UL data again (for example, convert (rewrite) the content included in the existing header to the corresponding bearer ID) and transmit it to the base station.

For DL data, U2N Relay UE#1 can include the bearer ID sent by the base station in the SRAP header.

For example, for DL data, the base station may include i) the local ID (new local ID for U2N Remote UE) allocated/configured in Step 6 and ii) bearer ID for SRB (or DRB) in the SRAP header and transmit it to U2N Relay UE#1. U2N Relay UE#1 may rewrite the local ID (local ID for U2N Remote UE) and bearer ID for SRB (or DRB) allocated/set in Step 3 into the SRAP header of the DL data and transmit it to U2N remote UE.

**FIG. 13** **shows a first example of SRAP header conversion of U2N Relay UE according to the second embodiment of the present specification.**

As shown in FIG. 13, the U2N Relay UE may rewrite the SRAP header.

The left part of FIG. 13 shows an example of SRAP data used for PC5 connection between remote UE and relay UE#1.

For UL data, UE ID (for SRC) may be a local ID for remote UE assigned in Step 3. For UL data, UE ID (for DST) may be a local ID for relay UE#1 assigned in Step 3. For UL data, the header of SRAP data used for End-to-End PC5 connection may include bearer ID for SRB (or DRB).

For DL data, UE ID (for SRC) may be a local ID for relay UE#1 assigned in Step 3. For DL data, UE ID (for DST) may be a local ID for remote UE assigned in Step 3. For DL data, the header of SRAP data used in End-to-End PC5 connection may include a bearer ID (bearer ID for sidelink) for SRB (or DRB).

The right part of FIG. 13 shows an example of SRAP data used for Uu connection between relay UE#1 and base station. For UL data, UE ID (allocated by NG-RAN) may be a local ID for remote UE allocated in Step 6. For DL data, UE ID (allocated by NG-RAN) may be a local ID for remote UE allocated in Step 6. The header of SRAP data used in Uu link may include a bearer ID for SRB (or DRB).

**FIG. 14** **shows a second example of SRAP header conversion of U2N Relay UE according to the second embodiment of the present specification.**

As shown in FIG. 14, U2N relay UE may rewrite SRAP header.

For DL traffic/data, for transmission on PC5 connection (connection between U2N Remote UE and U2N Relay UE#1), U2N Relay UE#1 may add the following information to the existing SRAP header (SRAP Data PDU) of DL data sent by the base station and transmit it to U2N Remote UE:
- Local ID pair allocated/configured by U2N Relay UE#1 in Step 3 (Local ID for relay UE#1 in UE ID (for SRC), Local ID for remote UE in UE ID (for DST))
- Bearer ID for SRB (or DRB) used for current Uu link

For example, U2N Relay UE#1 may add the SRAP header including the above-mentioned information to the SRAP of existing DL data.

The U2N Remote UE that receives the DL data may remove two SRAP headers (the SRAP header added by the base station to the DL data and the SRAP header added by the relay UE#1 to the DL data).

For UL traffic/data, the U2N Remote UE may first configure the SRAP header (the local ID for the remote UE allocated/configured by the base station in Step 6 and the bearer ID for the SRB (or DRB)) to be used in the Uu link. The U2N Remote UE may include the local ID allocated/configured by the base station in Step 6 in the SRAP header. Then, the U2N Remote UE may add the SRAP header for the PC5 connection (the local ID pair allocated/configured in Step 3 and the bearer ID for the SRB (or DRB)) and forward it to the U2N Relay UE#1. U2N Relay UE#1 may remove only the SRAP header for PC5 connection (Local ID pair allocated/configured in Step 3 and Bearer ID for SRB (or DRB) used for current E2E PC5 connection) and transmit it to the base station through Uu Relay RLC channel (Uu Relay RLC channel established through Step 6).

In order to perform the above-described operation, the base station may also transmit the Local ID information for U2N Remote UE allocated by the base station in Step 6 to U2N Remote UE in Step 8.

Instead of the base station separately allocating/configuring a local ID for the U2N Remote UE, the base station may also use the local ID allocated/configured for the U2N Remote UE in Step 3 for the Uu link. To this end, in Step 5, U2N Relay UE#1 may transmit the local ID currently allocated/configured for the U2N Remote UE to the base station.

If the base station of the U2N Remote UE is split into CU-DU (for example, divided into gNB-CU and gNB-DU), the gNB-CU may transmit the local ID for the U2N Remote UE transmitted by U2N Relay UE#1 to the gNB-DU. If the base station (e.g., gNB-CU) determines that the local ID for the U2N Remote UE received in Step 5 is already allocated/configured for another U2N Remote UE currently connected to the base station, the base station (e.g., gNB-CU) may allocate a new local ID for the U2N Remote UE and then transmit it to the U2N relay UE (and/or U2N remote UE) through Step 8. In this process, the U2N Relay UE#1 may notify the U2N Relay UE#2 and U2N Relay UE#3 that the local ID for the U2N Remote UE has been changed through the RRCReconfigurationSidelink message as in Step 3.

Alternatively, the local ID allocated/configured by the base station for the U2N Remote UE in Step 6 may be used in the section between the U2N Remote UE and the U2N Relay UE#1. For this purpose, the base station may include the local ID allocated/configured by the base station in the RRCSetup message in Step 8 and transmit it to the U2N Remote UE. Then, the U2N Remote UE or U2N Relay UE#1 may notify the U2N Relay UE#2 and U2N Relay UE#3 that the local ID for the U2N Remote UE has been changed through the RRCReconfigurationSidelink message as in Step 3.

### 7) Step 7

U2N Relay UE#1 may transmit the RRCSetupRequest message received in Step 4 to the base station through the Uu Relay RLC channel for the SRB0 message allocated/set in Step 6.

At this time, U2N Relay UE#1 may include the local ID for the U2N Remote UE received in Step 6 and the bearer ID of SRB0 in the SRAP header of the RRCSetupRequest message. Through this, the base station may distinguish/identify the U2N Remote UE.

### 8) Step 8

The base station may decide to create an RRC connection with the U2N Remote UE. In this case, the base station may respond to the U2N Remote UE by sending an RRCSetup message. In this process, U2N Relay UE#1 may modify/rewrite the SRAP header of the RRCSetup message sent by the base station into a form suitable for the section between U2N Remote UE and U2N Relay UE#1 and forward it to U2N Remote UE through U2N Relay UE#2 and U2N Relay UE#3.

The base station may include, in the RRCSetup message, the information that U2N Remote UE uses to map/route each SRB (and DRB) to a specific egress PC5 Relay RLC channel in the first PC5 connection between U2N Remote UE and U2N Relay UE#3.

The mapping/routing information may be information for mapping/routing a specific ingress PC5 Relay RLC channel to an egress PC5 Relay RLC channel for each SRB and DRB.

### 9) Step 9

The base station may allocate/configure the PC5 Relay RLC channel configuration for the PC5 connection between U2N Relay UE#1 and U2N Relay UE#2 through the RRC Reconfiguration process. The PC5 Relay RLC channel configuration may be used to transmit SRB1 messages to U2N Relay UE#1.

If the Uu Relay RLC channel for transmitting SRB1 messages was not allocated/configured in Step 6, the base station may also transmit the configuration information to U2N relay UE#1.

The PC5 Relay RLC channel configuration for the PC5 connection (e.g., the second PC5 connection) between U2N Relay UE#3 and U2N Relay UE#2 for transmitting SRB1 message may be allocated/configured to U2N Relay UE#2 and U2N Relay UE#3. For this, one or more of the following may be used:
- A. The base station of the U2N Remote UE may first transmit the PC5 Relay RLC channel configuration to be allocated/configured to each U2N Relay UE (U2N Relay UE#2, U2N Relay UE#3) to U2N Relay UE#1. The U2N Relay UE#1 may then transmit it to each U2N Relay UE (U2N Relay UE#2, U2N Relay UE#3) via an RRCReconfigurationSidelink message. Or, the PC5 Relay RLC channel configuration to be allocated/configured to each U2N Relay UE (U2N Relay UE#2, U2N Relay UE#3) may be transmitted to the U2N Remote UE in Step 8, and the U2N Remote UE may also transmit it to each U2N Relay UE via the RRCReconfigurationSidelink message.
- B. When the U2N Relay UE#2 (or U2N Relay UE#3) is in the RRC_CONNECTED state, the PC5 Relay RLC channel configuration information (PC5 Relay RLC channel configuration information for transmitting the SRB1 message) for the U2N Remote UE and U2N Relay UE#1 pair may be allocated/configured through each base station to which the current RRC is connected. In this case, the U2N Relay UE#2 (or U2N Relay UE#3) may transmit some or all of the following information (i and ii) to the base station about the U2N Remote UE and U2N Relay UE#1 pair: i. L2 IDs and/or Local IDs for the U2N Remote UE and U2N Relay UE#1 pair; ii. Information about the U2N Relay UEs located between the U2N Remote UE and U2N Relay UE#1 pair (e.g., L2 ID(s) for each U2N Relay UE(s) etc.)
- C. If the U2N Relay UE#2 (or U2N Relay UE#3) is in RRC_IDLE (or RRC_INACTIVE) state, the U2N Relay UE#2 (or U2N Relay UE#3) may receive PC5 Relay RLC channel configuration information via SIB. Alternatively, PC5 Relay RLC channel configuration information may be (pre-)configured inside each U2N Relay UE. Alternatively, while the U2N Relay UE#2 (or U2N Relay UE#3) is in the RRC_CONNECTED state, it is possible to store the PC5 Relay RLC channel configuration information (PC5 Relay RLC channel configuration information for transmitting the SRB1 message) most recently allocated from the base station and continue to use it.

### 10) Step 10

The U2N Remote UE may transmit an RRCSetupComplete message toward the base station (U2N Relay UE#3, U2N Relay UE#2, U2N Relay UE#1).

The U2N Remote UE may perform allocation/configuration of bearers to be used in the RRC connection with the base station according to the RRCSetup message received in Step 8. And, U2N Remote UE may transmit RRCSetupComplete message to base station to inform of allocation/configuration of bearer allocated/configured for RRC connection.

U2N Remote UE may include Registration Request message in RRCSetupComplete message for registration with network.

In this process, U2N Relay UE#1 may modify/rewrite SRAP header of received RRCSetupComplete message into a form suitable for transmitting SRB1 message and transmit it to base station.

### 11) Step 11

Base station may transmit registration request message received in Step 10 to 5GC (e.g., AMF) through NGAP INITIAL UE message. NGAP INITIAL UE message may include indication that U2N Remote UE connected through multi-hop U2N relay.

### 12) Step 12

In order for the 5GC (e.g., AMF) to notify the UE of registration acceptance and for the base station to create a UE context, the 5GC (e.g., AMF) may transmit an NGAP INITIAL CONTEXT SETUP REQUEST message containing a registration acceptance message to the base station.

At this time, the 5GC (e.g., AMF) may also notify the base station of whether the multi-hop U2N relay operation is authorized for the U2N Remote UE.

### 13) Step 13

Based on the information received from the AMF in Step 12, the base station may decide to additionally create/allocate SRBs and/or DRBs to transmit and receive data (and/or signaling) with the U2N Remote UE.

In this case, the base station may request the U2N Remote UE to create SRBs and/or DRBs for transmitting and receiving data (and/or signaling) through the RRC Reconfiguration process. For this purpose, the base station may allocate/configure PDCP and SDAP configurations for the SRBs (and/or DRBs).

In addition, the base station may allocate/configure PC5 Relay RLC channel configuration information for the SRBs (and/or DRBs) in the PC5 connection (e.g., the first PC5 connection) between the U2N Remote UE and the U2N Relay UE#3 and transmit it to the U2N Remote UE. Based on the configuration information received from the base station, the U2N Remote UE may allocate/configure the PC5 Relay RLC channel toward the U2N Relay UE#3.

### 14) Step 14

The base station may initiate an RRC Reconfiguration process toward U2N Relay UE#1 to additionally allocate/create a Uu Relay RLC channel to be used for transmitting the additionally generated SRBs (and/or DRBs) between U2N Relay UE#1 and the base station.

In addition, the base station may allocate/configure a PC5 Relay RLC channel for the SRBs (and/or DRBs) in the PC5 connection (e.g., the third PC5 connection) between U2N Relay UE#2 and U2N Relay UE#1 and transmit it to U2N Relay UE#1.

The base station of the Remote UE may predetermine/assign QoS values for each PC5 connection (QoS values for each PC5 connection required in the process of additionally allocating/configuring the PC5 Relay RLC channel configuration for the additionally generated DRBs to U2N Relay UE#2 and U2N Relay UE#3). The base station of the Remote UE may transmit the determined/allocated QoS value to each U2N Relay UE through the U2N Remote UE or U2N Relay UE#1.

Alternatively, in Step 14, the base station may transmit both the split QoS value allocated/configured for the Uu link and the split QoS value allocated/configured for the E2E PC5 connection to the U2N Relay UE#1. The U2N Relay UE#1 may appropriately split the split QoS value allocated/configured for the E2E PC5 connection for each PC5 connection and inform each U2N Relay UE of the split QoS value.

Instead of the base station transmitting the split QoS value (e.g., PDB) allocated/configured for E2E PC5 connection to U2N Relay UE#1, the base station may also transmit the split QoS value to U2N Remote UE in Step 13. In this case, Step 15 may be initiated from U2N Remote UE.

### 15) Step 15

U2N Relay UE#1 may transmit the PC5 Relay RLC channel (for SRBs/DRBs) information for the third PC5 connection received in Step 14 to U2N Relay UE#2 through RRC Reconfiguration Sidelink process. U2N Relay UE#2 may allocate/configure the PC5 Relay RLC channel towards U2N Relay UE#1.

In addition, U2N Relay UE#1 may also transmit the split QoS value allocated/configured on the PC5 Relay RLC channel for the second PC5 connection.

One or more of the following may be used as a method for additionally allocating/configuring the PC5 Relay RLC channel configuration for the PC5 connection (e.g., the second PC5 connection) between U2N Relay UE#3 and U2N Relay UE#2 to U2N Relay UE#2 and U2N Relay UE#3 for additionally generated SRBs (and/or DRBs):
- A. The base station of the U2N Remote UE may first transmit information about the PC5 Relay RLC channel configuration to be allocated/configured on the PC5 connection (e.g., the second PC5 connection) between U2N Relay UE#3 and U2N Relay UE#2 to U2N Relay UE#1 in Step 14. U2N Relay UE#1 may transmit information about PC5 Relay RLC channel configuration to each U2N Relay UE via RRCReconfigurationSidelink message in Step 15. Alternatively, the base station of U2N Remote UE may transmit information about PC5 Relay RLC channel configuration to be allocated/configured in the second PC5 connection to U2N Remote UE in Step 13 and transmit it to each U2N Relay UE via RRCReconfigurationSidelink message.
- B. When U2N Relay UE#2 (or U2N Relay UE#3) is in RRC_CONNECTED state, U2N Relay UE#2 (or U2N Relay UE#3) may be allocated/configured PC5 Relay RLC channel configuration information for additionally created SRBs (and/or DRBs) for U2N Remote UE and U2N Relay UE#1 pair through each base station to which it is currently RRC connected. In this case, the U2N Relay UE#2 (or U2N Relay UE#3) may transmit some or all of the following information (information i to iii) about the U2N Remote UE and U2N Relay UE#1 pair to the corresponding base station: i. L2 IDs and/or Local IDs for the U2N Remote UE and U2N Relay UE#1 pair; ii. Information about U2N Relay UEs located between the U2N Remote UE and U2N Relay UE#1 pair (e.g., L2 ID(s) for each U2N Relay UE(s) etc.); iii. Split QoS value (e.g., PDB) allocated/configured for the second PC5 connection
- C. When U2N Relay UE#2 (or U2N Relay UE#3) is in RRC_IDLE or RRC_INACTIVE state, U2N U2N Relay UE#2 (or U2N Relay UE#3) may receive PC5 Relay RLC channel configuration information for additionally created SRB (and/or DRB) via SIB. Alternatively, PC5 Relay RLC channel configuration information may be (pre-)configured within each U2N Relay UE. Alternatively, while the U2N Relay UE#2 (or U2N Relay UE#3) is in RRC_CONNECTED state, it is possible to store PC5 Relay RLC channel configuration information for additionally created SRB (and/or DRB) that was most recently allocated from the base station and continue to use it.

U2N Relay UE#2 may allocate/create PC5 Relay RLC channel for the second PC5 connection based on the configuration information obtained through the above A, B, or C operations. And, U2N Relay UE#2 may transmit the configuration information to U2N Relay UE#3 through RRC Reconfiguration Sidelink process. U2N Relay UE#3 may allocate/configure PC5 Relay RLC channel toward U2N Relay UE#2.

U2N Remote UE may transmit PC5 Relay RLC channel configuration information for the first PC5 connection obtained in Step 13 to U2N Relay UE#3 through RRC Reconfiguration Sidelink process. U2N Relay UE#3 may allocate/configure PC5 Relay RLC channel toward U2N Remote UE.

### 16) Step 16

The base station may send an NGAP INITIAL CONTEXT SETUP RESPONSE message to the AMF to inform that the creation of the UE context at the base station has been completed successfully.

### 17) Step 17

UL/DL data may be transmitted through U2N Relay UE#1, U2N Relay UE#2, and U2N Relay UE#3.

If the serving base station of the U2N Remote UE (or U2N Relay UE#2 or U2N Relay UE#3) is split into CU-DU (e.g., divided into gNB-CU and gNB-DU), the gNB-CU may provide the gNB-DU with relevant information (e.g., information about SRBs (and/or DRBs) allocated/configured in the U2N Remote UE, local ID for the U2N Remote UE, the split QoS value, etc.). And, gNB-CU may request gNB-DU to allocate/setup Uu Relay RLC channel configuration on Uu link or PC5 Relay RLC channel configuration on each PC5 connection.

### III. Third embodiment

The following drawings are created to explain specific examples of this specification. The names of specific devices or specific signals/messages/fields described in the drawings are presented as examples, and therefore, the technical features of this specification are not limited to the specific names used in the following drawings.

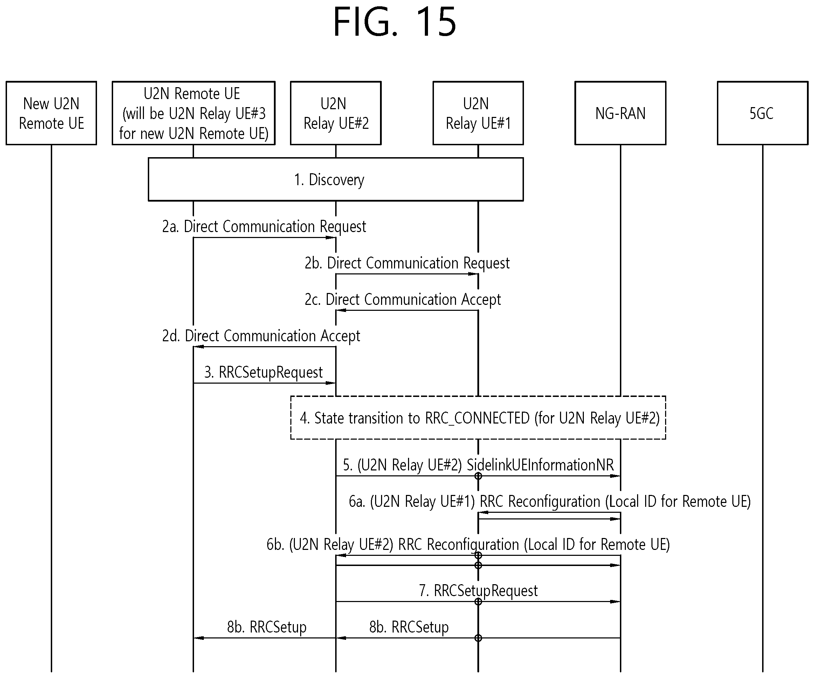

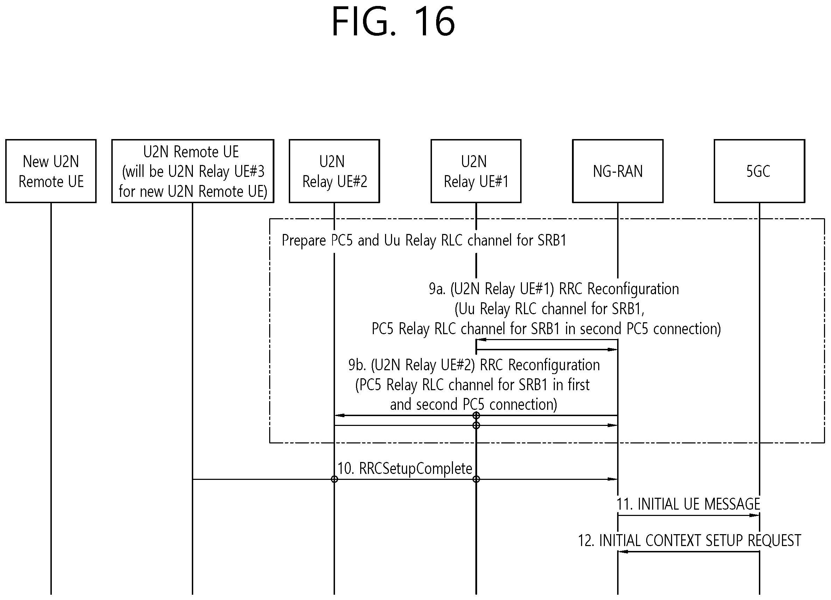

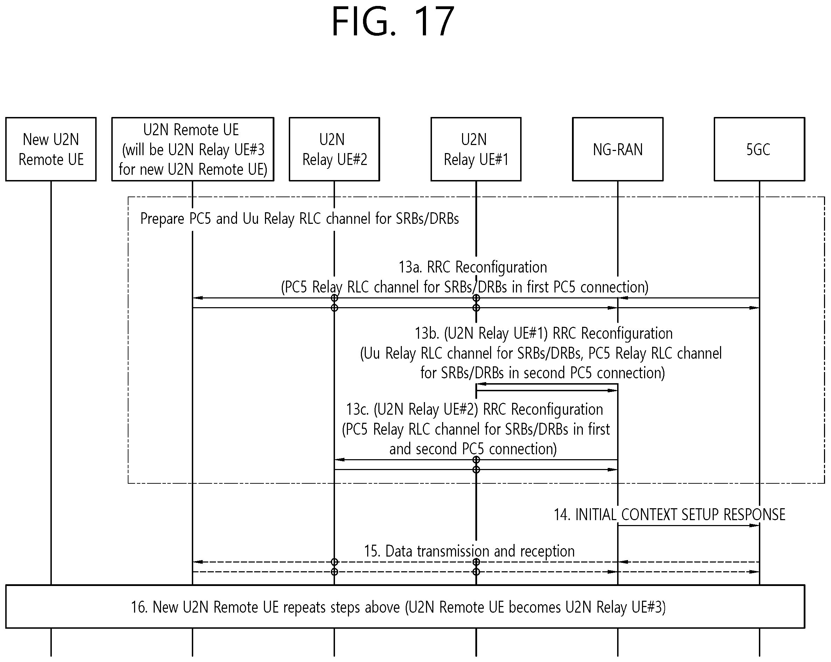

**FIGS. 15****,** **16****, and** **17** **show procedures for the third embodiment of this specification.**

The contents of this specification for U2N Relay UE#2 (e.g., 2-hop U2N Relay UE) may also be applied to U2N Relay UEs of 3-hop or more hops (e.g., intermediate UE-to-Network Relay UE).

### 1~2) Step 1 to Step 2

The contents of FIGS. 6 and 7 may be applied.

### 3) Step 3

The U2N Remote UE may attempt to create an RRC connection by sending an RRCSetupRequest message to the base station through U2N Relay #2.

Also, the existing PC5 Relay RLC channel configuration (e.g., SL-RLC0) defined for transmitting/receiving SRB0 messages (e.g., RRCSetupRequest, RRCSetup, etc.) of U2N Remote UE may be used, or a separate PC5 Relay RLC channel configuration for multi-hop U2N relay operation may be newly defined and used.

### 4) Step 4

If U2N Relay UE#2 is in RRC_IDLE (or RRC_INACTIVE) state, U2N Relay UE#2 may transition to RRC_CONNECTED state after receiving RRCSetupRequest message of U2N Remote UE. For the transition process, the procedure of Figure 8.19.1-1 or Figure 8.19.3-1 of TS 38.401 v18.0.0 may be applied.

In this process, the base station may allocate a local ID for U2N Relay UE#2 that has connected to the network as a U2N Remote UE. And, the base station may allocate/configure, to U2N Relay UE#2 and U2N Relay UE#1, information for mapping/routing SRBs (and DRBs) related to the local ID (for U2N Relay UE#2) to a specific egress PC5/Uu Relay RLC channel.

U2N Relay UE#2 may have already transitioned to RRC_CONNECTED state before Step 4. For the transition process, the procedure of Figure 8.19.1-1 or Figure 8.19.3-1 of TS 38.401 v18.0.0 may be applied.

### 5) Step 5

U2N Relay UE#2, which receives the RRCSetupRequest message from U2N Remote UE, may request Uu Relay RLC channel setup/creation by transmitting a SidelinkUEInformationNR message to the base station. The Uu Relay RLC channel may be for transmitting the RRC message.

In this process, U2N Relay UE#2 may include the local ID allocated/set for U2N Relay UE#2 in the SRAP header of the SidelinkUEInformationNR message and transmit it to U2N Relay UE#1.

U2N Relay UE#1 may transmit the SidelinkUEInformationNR message with the SRAP header to the base station through the Uu Relay RLC channel for transmitting the SRB1 message of U2N Relay UE#2 based on the mapping/routing information received in Step 4.

### 6a) Step 6a

The base station may transmit some or all of the following information to the U2N Relay UE#1 via the RRCReconfiguration message of the U2N Relay UE#1 so that the base station can route the SRB0/1 message of the U2N Remote UE:
- A. A new local ID assigned/configured for the U2N Remote UE to distinguish/identify the U2N Remote UE on the Uu link or Uu Relay RLC channel between the U2N Relay UE#1 and the base station
- B. Uu Relay RLC channel configuration required to transmit the SRB0/1 message to the U2N Remote UE
- C. Information on the PC5 Relay RLC channel configuration between the U2N Relay UE#2 and the U2N Relay UE#1 to transmit the SRB0/1 message for the U2N Remote UE
- D. Information to map/route each SRAP Data PDU belonging to SRB0/1 to a specific egress PC5/Uu Relay RLC channel, or information to map/route SRAP Data PDUs transmitted over a specific ingress PC5/Uu Relay RLC channel for SRB0/1 to a specific egress Uu/PC5 Relay RLC channel. The above information may be assigned/set per Local ID (for U2N Remote UE) (or per pair of Local ID (for U2N Remote UE) and Local ID (for U2N Relay UE#2)).

### 6b) Step 6b

In order to route data (and/or signaling) of the U2N Remote UE, the base station may transmit some or all of the following information to the U2N Relay UE#2 via the RRCReconfiguration message of the U2N Relay UE#2:
- a) A new local ID assigned/configured for the U2N Remote UE to distinguish/identify the U2N Remote UE in the PC5 connection between the U2N Relay UE#1 and the U2N Relay UE#2 (and the PC5 connection between the U2N Relay UE#2 and the U2N Remote UE) (which may be the same as the local ID transmitted to the U2N Relay UE#1 in Step 6a)
- b) Configuring the PC5 Relay RLC channel between the U2N Relay UE#2 and the U2N Relay UE#1 for transmiting the SRB0/1 message for the U2N Remote UE
- c) Information that maps/routes each SRAP Data PDU belonging to the SRB (and DRB) to a specific egress PC5 Relay RLC channel. Or information that maps/routes SRAP Data PDUs transmitted over a specific ingress PC5 Relay RLC channel to a specific egress PC5 Relay RLC channel for each SRB and DRB. The above information may be assigned/set per local ID (for U2N Remote UE) or per pair of local ID (for U2N Remote UE) and local ID (for U2N Relay UE#2).

In this case, the base station may add the SRAP header including the Local ID of U2N Relay UE#2 to the RRCReconfiguration message. And, the base station may transmit it to U2N Relay UE#2 through U2N Relay UE#1.

As in the UE-to-Network Relay operation in TS 38.351 v18.0.0, the data (and/or signaling) of the U2N Remote UE may be routed via the local ID assigned/set in step 6 in all segments between the U2N Remote UE and the base station. For this purpose, the local ID value (i.e. INTEGER (0...255)) (integer value between 0 and 255) as defined in TS 38.331 v18.0.0 may be used. Alternatively, a separate Local ID for Multi-hop U2N Relay operation may be defined to distinguish it from the traditional Single-hop U2U Relay operation or the traditional Single-hop U2N Relay operation.

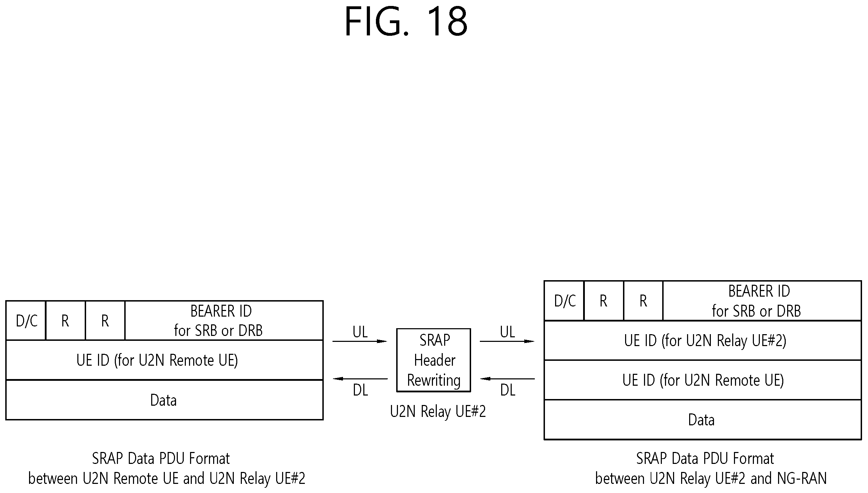

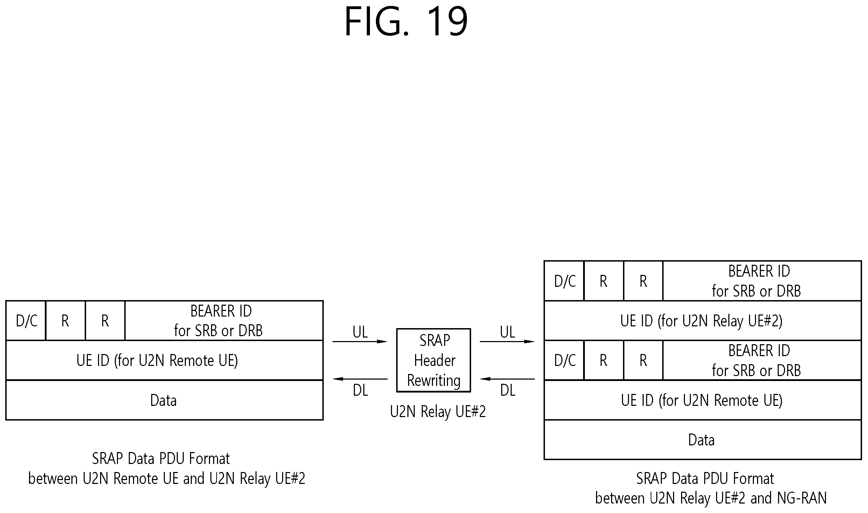

U2N Relay UE#2 may perform conversion (or addition) (rewriting) of the SRAP header between the U2N Remote UE and the base station as shown in FIG. 18 (or FIG. 19) by referring to the information included in the RRCReconfiguration message of Step 6b.

For example, for DL data, the base station may include, in the SRAP header, i) the local ID allocated/configured for U2N Remote UE in Step 6 and ii) the local ID allocated/configured for U2N Relay UE#2 in Step 4 and the bearer ID for the SRB (or DRB). And, the base station may transmit it to U2N Relay UE#2.

Based on the content of the SRAP header sent by the base station, the U2N Relay UE#2 may identify that the corresponding DL data is for the U2N Remote UE. And, the U2N Relay UE#2 may include only the local ID of the U2N Remote UE in the SRAP header.

For example, for UL data, the U2N Remote UE may transmit, toward U2N Relay UE#2, the SRAP header including the local ID allocated/configured in Step 8 and the bearer ID for the SRB (or DRB) used to send the current data (and/or signaling). Based on this, U2N Relay UE#2 may add the local ID (local ID for U2N Relay UE#2) allocated/set in Step 4 and transmit, to the base station, the SRAP header including the bearer ID for SRB (and DRB).

**FIG. 18** **shows a first example of SRAP header conversion of U2N Relay UE according to the third embodiment of the present specification.**

As shown in FIG. 18, U2N Relay UE may rewrite SRAP header.

The left part of FIG. 18 shows an example of SRAP data used for PC5 connection between U2N Remote UE and U2N Relay UE#2.

The right part of FIG. 18 shows an example of SRAP data used for Uu connection between U2N Relay UE#2 and base station.

**FIG. 19** **shows a second example of SRAP header conversion of U2N Relay UE according to the third embodiment of the present specification.**

As shown in FIG. 19, the U2N Relay UE may rewrite the SRAP header.

For DL traffic/data, for transmission on the PC5 connection between the U2N Remote UE and the U2N Relay UE#2, the base station may configure the SRAP Data PDU (or the DL data and the SRAP header of the DL data) based on the information about the U2N Remote UE. The base station may add the SRAP header including the local ID of the U2N Relay UE#2 and transmit it to the U2N Relay UE#2.

In this case, the U2N Relay UE#2 may remove only the SRAP header related to the local ID of the U2N Relay UE#2 and transmit the remaining SRAP Data PDU to the U2N Remote UE through the PC5 Relay RLC channel.

For UL traffic/data, the U2N Remote UE may include, in the SRAP header, the bearer ID for the SRB (or DRB) currently used to send signaling (and/or data) along with the local ID allocated/configured in Step 8. And, the U2N Remote UE may transmit it toward the U2N Relay UE#2. The U2N Relay UE#2 may add the SRAP header including the local ID of the U2N Relay UE#2 and transmit it to the base station. In this case, the base station may remove two SRAP headers.

To support the rewriting of the SRAP PDU formats of FIGS. 18 and 19, if the base station of the U2N Remote UE is split into CU-DU (e.g., divided into gNB-CU and gNB-DU), the gNB-CU may transmit the local ID for the U2N Relay UE#2 and the local ID for the U2N Remote UE together to the gNB-DU.

### 7) Step 7

U2N Relay UE#2 may tranmit the RRCSetupRequest message received in Step 3 to the base station through the configuration allocated/set in Step 6.

At this time, if U2N Relay UE#2 configures the SRAP header as described in Step 6 and transmit it to the base station, the base station may distinguish/identify the U2N Remote UE based on this.

### 8) Step 8

The base station may decide to create an RRC connection with the U2N Remote UE. In this case, the base station may transmit an RRCSetup message to the U2N Remote UE for responding.

In this process, the base station may configure the SRAP header as described in Step 6 and transmit it to the U2N Relay UE#2. Then, U2N Relay UE#2 may modify/rewrite SRAP header of RRCSetup message sent by base station into a form suitable for the section between U2N Remote UE and U2N Relay UE#2 and transmit it to U2N Remote UE.

The base station may include, in RRCSetup message, information for mapping each SRB (and DRB) (to be used by U2N Remote UE in PC5 connection (e.g., for first PC5 connection) between U2N Remote UE and U2N Relay UE#2) to a specific egress PC5 Relay RLC channel. This may be information for mapping/routing a specific ingress PC5 Relay RLC channel to an egress PC5 Relay RLC channel for each SRB and DRB.

### 9) Step 9

If the PC5/Uu Relay RLC channel for SRB1 message transmission of U2N Remote UE is not allocated/configured in Step 6a, the base station may allocate/configure, to U2N Relay UE#1, PC5 Relay RLC channel configuration for SRB1 message transmission for PC5 connection between U2N Relay UE#1 and U2N Relay UE#2 through RRC Reconfiguration process in Step 9a. If the Uu Relay RLC channel for SRB1 message transmission is not allocated/configured in Step 6a, its configuration information may also be transmitted.

If the PC5 Relay RLC channel for SRB1 message transmission of U2N Remote UE is not allocated/configured in Step 6b, the base station may allocate/configure, to U2N Relay UE#2, the PC5 Relay RLC channel configuration for the PC5 connection between U2N Remote UE and U2N Relay UE#2 (and the PC5 connection between U2N Relay UE#1 and U2N Relay UE#2) for SRB1 message transmission through the RRC Reconfiguration process in Step 9b.

### 10) Step 10

The U2N Remote UE may perform bearer allocation/configuration (etc.) to be used in the RRC connection with the base station according to the RRCSetup message received in Step 8. Then, the U2N Remote UE may send an RRCSetupComplete message to the base station to notify that the bearer has been allocated/configured. The U2N Remote UE may include a registration request message in the RRCSetupComplete message and transmit it to the base station to register with the network.

In this process, U2N Relay UE#2 may modify/rewrite the SRAP header of the RRCSetupComplete message sent by U2N Remote UE into a form suitable for SRB1 message transmission and transmit it to the base station.

### 11) Step 11

The base station may transmit the registration request message received in Step 10 to the AMF through the NGAP INITIAL UE message. At this time, the NGAP INITIAL UE message may include an indication that the U2N Remote UE has connected through the multi-hop U2N relay.

### 12) Step 12

In order to notify the UE of registration acceptance and have the base station create a UE context, the AMF may transmit the NGAP INITIAL CONTEXT SETUP REQUEST message containing the registration acceptance message to the base station. At this time, the AMF may also inform the base station whether the multi-hop U2N relay operation is authorized for the U2N Remote UE.

### 13) Step 13

The base station may decide to additionally create/allocate SRBs (and/or DRBs) to transmit/receive data (and/or signaling) with the U2N Remote UE based on the information received from the AMF in Step 12.

### 13a) Step 13a

Based on the above decision, the base station may request the creation of SRBs (and/or DRBs) to transmit/receive data (and/or signaling) to the U2N Remote UE through the RRC Reconfiguration process in Step 13a.

For this purpose, the base station may allocate/configure PDCP and SDAP configurations for the SRBs (and/or DRBs). In addition, the base station may allocate/configure PC5 Relay RLC channel configuration information for SRBs (and/or DRBs) in the PC5 connection (e.g., the first PC5 connection) between the U2N Remote UE and the U2N Relay UE#2 and transmit it to the U2N Remote UE.

Based on the configuration information received from the base station, the U2N Remote UE may allocate/configure a PC5 Relay RLC channel toward the U2N Relay UE#2.

### 13b) Step 13b

The base station may initiate an RRC Reconfiguration process toward the U2N Relay UE#1 to additionally allocate/create an Uu Relay RLC channel to be used for transmitting the additionally generated SRBs (and/or DRBs) between the U2N Relay UE#1 and the base station. Additionally, the base station may allocate/configure a PC5 Relay RLC channel for SRBs (and/or DRBs) in the PC5 connection (e.g., the second PC5 connection) between U2N Relay UE#2 and U2N Relay UE#1 and transmit it to U2N Relay UE#1.

### 13c) Step 13c

The base station may initiate an RRC Reconfiguration process towards U2N Relay UE#2 to allocate/configure a PC5 Relay RLC channel for the additionally created SRBs (and/or DRBs) on the PC5 connection between U2N Remote UE and U2N Relay UE#2 (and the PC5 connection between U2N Relay UE#1 and U2N Relay UE#2) and transmit it to U2N Relay UE#2.

### 14) Step 14

The base station may notify that the creation of the UE context at the base station has been completed successfully by sending an NGAP INITIAL CONTEXT SETUP RESPONSE message to the AMF.

### 15) Step 15

UL/DL data may be transmitted via U2N Relay UE#1, U2N Relay UE#2.

### 16) Step 16

A new U2N Remote UE may attempt to connect to the network by repeating Steps 1~15 of FIGS. 15 to 17. In this case, the existing U2N Remote UE may become U2N Relay UE#3 and perform the role of modifying/rewriting the SRAP header of U2N Relay UE#2 of FIGS. 15 to 17.

If U2N Relay UE#3 (e.g., the existing U2N Remote UE of FIGS. 15 to 17) is in RRC_IDLE or RRC_INACTIVE state, when U2N Relay UE#3 receives an RRCSetupRequest message from the new U2N Remote UE, it may repeat Steps 1 to 15 of FIGS. 15 to 17 to transition to RRC_CONNECTED state and then perform the role of U2N Relay UE#3.

If the serving base station of the U2N Remote UE is split into CU-DU (e.g., divided into gNB-CU and gNB-DU), the gNB-CU may provide the gNB-DU with relevant information (e.g., information about SRBs (and/or DRBs) allocated/configured in the Uu link, local ID for the U2N Remote UE, the split QoS value, etc.). In addition, the gNB-CU may request the gNB-DU to allocate/configure Uu Relay RLC channel configuration in the Uu link or PC5 Relay RLC channel configuration for SLRBs in each PC5 connection.

Unlike what was described in the first to third embodiments, based on the number of hops from the Remote UE, U2N Relay UE#3 may be called a 1-hop U2N Relay UE (or the first U2N Relay UE or #1 U2N Relay UE or hop#1 U2N Relay UE), U2N Relay UE#2 may be called a 2-hop U2N Relay UE (or the second U2N Relay UE or #2 U2N Relay UE or hop#2 U2N Relay UE), and U2N Relay UE #1 may be called a 3-hop U2N Relay UE (or the third U2N Relay UE or #3 U2N Relay UE or hop# U2N Relay UE).

According to the disclosure of this specification, in a multi-hop U2N relaying scenario, all U2N Relay UEs (and base stations) that participate/involve in transmitting signaling (and/or data) of a U2N Remote UE may be provided with local ID information for the U2N Remote UE (and mapping/routing information to egress Uu/PC5 Relay RLC channel for each bearer).

As a result, the signaling (and/or data) of the U2N Remote UE may be efficiently delivered to the network. Alternatively, the signaling (and/or data) of the U2N Remote UE may be efficiently delivered from the network to the U2N Remote UE.

For UL/DL data transmission of the U2N Remote UE, a method for determining/assigning QoS values for each PC5 connection may be provided, so that QoS for UL/DL data of the U2N Remote UE may be satisfied.

The following actions may be performed:
- The U2N Relay UE or the base station may allocate/configure a local ID for the U2N Remote UE and inform the nodes participating in the multi-hop U2N relay.
- For signaling and/or data transmission to the U2N Remote UE, the base station of the U2N Remote UE (or the base station of the Intermediate U2N Relay UE) may allocate/configure egress PC5/Uu Relay RLC channel configuration information for each bearer to the Intermediate U2N Relay UE (e.g., 2-hop U2N Relay UE, (n-1)-hop U2N Relay UE).
- For signaling (and/or data) transmission to the U2N Remote UE, the 1-hop (or n-hop) U2N Relay UE may modify/convert/rewrite the SRAP header.
- For data transmission to U2N Remote UE, U2N Relay or Base Station may assign/configure QoS value for each PC5 connection.

The following drawings are created to explain specific examples of this specification. The names of specific devices or names of specific signals/messages/fields described in the drawings are presented as examples, and therefore, the technical features of this specification are not limited to the specific names used in the following drawings.

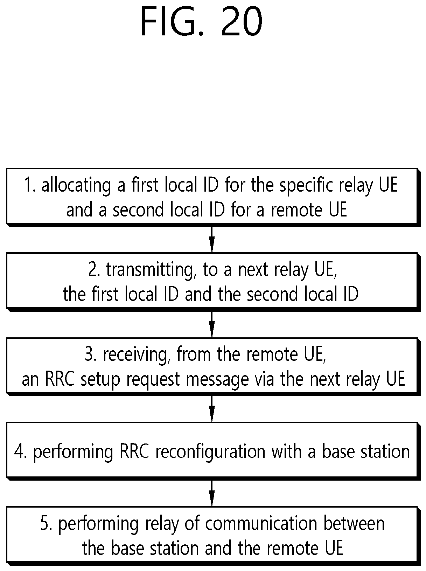

**FIG. 20** **shows the procedure of the specific relay UE according to disclosure of the present specification.**
1. The specific relay UE may allocate a first local ID for the specific relay UE and a second local ID for a remote UE.
2. The specific relay UE may transmitt, to a next relay UE, the first local ID and the second local ID.

The next relay UE may be a UE relaying communication between the specific relay UE and the remote UE.
3. The specific relay UE may receive, from the remote UE, an RRC (Radio Resource Control) setup request message via the next relay UE.
4. The specific relay UE may perform RRC reconfiguration with a base station, based on the RRC setup request message.

The step of performing the RRC reconfiguration may comprise: receiving, by the specific relay UE from the base station, a third local ID for the remote UE allocated by the base station,

5. The specific relay UE may perform relay of communication between the base station and the remote UE, based on the second local ID and the third local ID.

The step of performing relay of communication between the base station and the remote UE may comprise: rewriting, by the specific relay UE, header of SRAP (Sidelink Relay Adaptation Protocol) of a data for the remote UE.

The step of performing relay of communication between the base station and the remote UE may comprise: receiving, by the specific relay UE from the base station, a downlink data for the remote UE; wherein header of SRAP of the downlink data includes the third local ID and bearer ID for Uu link, rewriting, by the specific relay UE, the header of SRAP of the downlink data with the second local ID and a bearer ID for the sidelink; and transmitting, by the specific relay UE to the remote UE, the rewritten downlink data via the next relay UE.

The step of performing relay of communication between the base station and the remote UE may comprise: receiving, by the specific relay UE from the base station, a downlink data for the remote UE, wherein header of SRAP of the downlink data includes the third local ID and bearer ID, adding, by the specific relay UE to the downlink data, header of new SRAP including the second local ID and a bearer ID for sidelink; and transmitting, by the specific relay UE to the remote UE, the added downlink data via the next relay UE.

The step of performing relay of communication between the base station and the remote UE may comprise: receiving, by the specific relay UE from the remote UE, an uplink data for the remote UE via the next relay UE; wherein header of SRAP of the uplink data includes the second local ID and a bearer ID for sidelink, rewriting, by the specific relay UE, the header of SRAP of the uplink data with the third local ID and a bearer ID for the Uu link; and transmitting, by the specific relay UE to the base station, the rewritten uplink data.

The step of performing relay of communication between the base station and the remote UE may comprise: receiving, by the specific relay UE from the remote UE, an uplink data for the remote UE via the next relay UE; wherein header of SRAP of the uplink data includes i) a first header including the second local ID and a bearer ID for sidelink and ii) a second header including the third local ID and a bearer ID for Uu link, removing, by the specific relay UE, the first header from the header of SRAP of the uplink data; and transmitting, by the specific relay UE to the base station, the removed uplink data.

The step of performing the RRC reconfiguration may comprise: receiving, by the specific relay UE from the base station, i) information on configuration of Uu relay RLC (Radio Link Control) channel for SRB (Signaling Radio Bearer) message for the remote UE or ii) information mapping a data for the remote UE to the Uu relay RLC channel.

The specific relay UE may establish a unicast link with the next relay UE.

The RRC setup request message may include the second local ID.

The specific relay UE may transmit, to the base station, an RLC channel setup request, based on the RRC setup request message.

The step of performing the RRC reconfiguration may be performed based on the RLC channel setup request.

The step of performing the RRC reconfiguration may comprise: receiving, by the specific relay UE from the base station, i) information on configuration of Uu relay RLC channel for SRB message for the remote UE or ii) information mapping a data for the remote UE to the Uu relay RLC channel.

Header of SRAP of the RRC setup request message may include the second local ID and a bearer ID for sidelink.

The specific relay UE may rewrite the header of SRAP of the RRC setup request message with the third local ID and a bearer ID for the Uu link.

The specific relay UE may transmit, to the base station, the rewritten RRC setup request message.

The specific relay UE may receive, from the base station, an RRC setup message, based on the RRC setup request message.

The specific relay UE may transmit, by the specific relay UE to the remote UE, the RRC setup message.

The specific relay UE may receive, from the remote UE, an RRC setup complete message, based on the RRC setup message.

The RRC setup complete message may include a registration request message of the remote UE.

The specific relay UE may transmit, to the base station, the RRC setup complete message.

The specific relay UE may transmit, to the base station, a L2 ID of the next relay UE, based on the RRC setup request message.

The step of performing the RRC reconfiguration may comprise: receiving, by the specific relay UE from the base station, i) information on PC5 Relay RLC channel used for PC5 connection between the next relay UE and the remote UE and ii) information on PC5 Relay RLC channel used for PC5 connection between the specific relay UE and the next relay UE.

Hereinafter, an apparatus for performing communication according to some embodiments of the present specification will be described.

For example, the apparatus may include a processor, a transceiver, and a memory.

For example, a processor may be configured to be operably coupled with a memory and a processor.

The processor may perform: allocating, by a specific relay UE (User Equipment), a first local ID for the specific relay UE and a second local ID for a remote UE; transmitting, by the specific relay UE to a next relay UE, the first local ID and the second local ID; wherein the next relay UE is a UE relaying communication between the specific relay UE and the remote UE, receiving, by the specific relay UE from the remote UE, an RRC (Radio Resource Control) setup request message via the next relay UE; performing, by the specific relay UE, RRC reconfiguration with a base station, based on the RRC setup request message; wherein the step of performing the RRC reconfiguration comprises: receiving, by the specific relay UE from the base station, a third local ID for the remote UE allocated by the base station, performing, by the specific relay UE, relay of communication between the base station and the remote UE, based on the second local ID and the third local ID.

Hereinafter, a processor for providing communication according to some embodiments of the present specification will be described.

The processor is configured to: allocating, by a specific relay UE (User Equipment), a first local ID for the specific relay UE and a second local ID for a remote UE; transmitting, by the specific relay UE to a next relay UE, the first local ID and the second local ID; wherein the next relay UE is a UE relaying communication between the specific relay UE and the remote UE, receiving, by the specific relay UE from the remote UE, an RRC (Radio Resource Control) setup request message via the next relay UE; performing, by the specific relay UE, RRC reconfiguration with a base station, based on the RRC setup request message; wherein the step of performing the RRC reconfiguration comprises: receiving, by the specific relay UE from the base station, a third local ID for the remote UE allocated by the base station, performing, by the specific relay UE, relay of communication between the base station and the remote UE, based on the second local ID and the third local ID.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: allocating, by a specific relay UE (User Equipment), a first local ID for the specific relay UE and a second local ID for a remote UE; transmitting, by the specific relay UE to a next relay UE, the first local ID and the second local ID; wherein the next relay UE is a UE relaying communication between the specific relay UE and the remote UE, receiving, by the specific relay UE from the remote UE, an RRC (Radio Resource Control) setup request message via the next relay UE; performing, by the specific relay UE, RRC reconfiguration with a base station, based on the RRC setup request message; wherein the step of performing the RRC reconfiguration comprises: receiving, by the specific relay UE from the base station, a third local ID for the remote UE allocated by the base station, performing, by the specific relay UE, relay of communication between the base station and the remote UE, based on the second local ID and the third local ID.

The present specification may have various effects.

For example, through the procedure disclosed in this specification, communication between a remote UE and a base station can be efficiently relayed in multi-hop.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method, comprising:
allocating, by a specific relay UE (User Equipment), a first local ID for the specific relay UE and a second local ID for a remote UE;
transmitting, by the specific relay UE to a next relay UE, the first local ID and the second local ID;
wherein the next relay UE is a UE relaying communication between the specific relay UE and the remote UE, receiving, by the specific relay UE from the remote UE, an RRC (Radio Resource Control) setup request message via the next relay UE;
performing, by the specific relay UE, RRC reconfiguration with a base station, based on the RRC setup request message;
wherein the step of performing the RRC reconfiguration comprises: receiving, by the specific relay UE from the base station, a third local ID for the remote UE allocated by the base station,
performing, by the specific relay UE, relay of communication between the base station and the remote UE, based on the second local ID and the third local ID.

2. The method of claim 1,
wherein the step of performing relay of communication between the base station and the remote UE comprises: rewriting, by the specific relay UE, header of SRAP (Sidelink Relay Adaptation Protocol) of a data for the remote UE.

3. The method of claim 1,
wherein the step of performing relay of communication between the base station and the remote UE comprises:
receiving, by the specific relay UE from the base station, a downlink data for the remote UE;
wherein header of SRAP of the downlink data includes the third local ID and bearer ID for Uu link,
rewriting, by the specific relay UE, the header of SRAP of the downlink data with the second local ID and a bearer ID for the sidelink; and
transmitting, by the specific relay UE to the remote UE, the rewritten downlink data via the next relay UE.

4. The method of claim 1,
wherein the step of performing relay of communication between the base station and the remote UE comprises:
receiving, by the specific relay UE from the base station, a downlink data for the remote UE,
wherein header of SRAP of the downlink data includes the third local ID and bearer ID,
adding, by the specific relay UE to the downlink data, header of new SRAP including the second local ID and a bearer ID for sidelink; and
transmitting, by the specific relay UE to the remote UE, the added downlink data via the next relay UE.

5. The method of claim 1,
wherein the step of performing relay of communication between the base station and the remote UE comprises:
receiving, by the specific relay UE from the remote UE, an uplink data for the remote UE via the next relay UE;
wherein header of SRAP of the uplink data includes the second local ID and a bearer ID for sidelink,
rewriting, by the specific relay UE, the header of SRAP of the uplink data with the third local ID and a bearer ID for the Uu link; and
transmitting, by the specific relay UE to the base station, the rewritten uplink data.

6. The method of claim 1,
wherein the step of performing relay of communication between the base station and the remote UE comprises:
receiving, by the specific relay UE from the remote UE, an uplink data for the remote UE via the next relay UE;
wherein header of SRAP of the uplink data includes i) a first header including the second local ID and a bearer ID for sidelink and ii) a second header including the third local ID and a bearer ID for Uu link,
removing, by the specific relay UE, the first header from the header of SRAP of the uplink data; and
transmitting, by the specific relay UE to the base station, the removed uplink data.

7. The method of one of the claims 1 to 6,
wherein the step of performing the RRC reconfiguration comprises:
receiving, by the specific relay UE from the base station, i) information on configuration of Uu relay RLC (Radio Link Control) channel for SRB (Signaling Radio Bearer) message for the remote UE or ii) information mapping a data for the remote UE to the Uu relay RLC channel.

8. The method of one of the claims 1 to 7, further comprising:
establishing, by the specific relay UE, a unicast link with the next relay UE.

9. The method of one of the claims 1 to 8,
wherein the RRC setup request message includes the second local ID.

10. The method of one of the claims 1 to 9, further comprising:
transmitting, by the specific relay UE to the base station, an RLC channel setup request, based on the RRC setup request message;
wherein the step of performing the RRC reconfiguration is performed based on the RLC channel setup request,
wherein the step of performing the RRC reconfiguration comprises: receiving, by the specific relay UE from the base station, i) information on configuration of Uu relay RLC channel for SRB message for the remote UE or ii) information mapping a data for the remote UE to the Uu relay RLC channel,
wherein header of SRAP of the RRC setup request message includes the second local ID and a bearer ID for sidelink,
rewriting, by the specific relay UE, the header of SRAP of the RRC setup request message with the third local ID and a bearer ID for the Uu link; and
transmitting, by the specific relay UE to the base station, the rewritten RRC setup request message.

11. The method of one of the claims 1 to 10, further comprising:
receiving, by the specific relay UE from the base station, an RRC setup message, based on the RRC setup request message;
transmitting, by the specific relay UE to the remote UE, the RRC setup message;
receiving, by the specific relay UE from the remote UE, an RRC setup complete message, based on the RRC setup message;
wherein the RRC setup complete message includes a registration request message of the remote UE,
transmitting, by the specific relay UE to the base station, the RRC setup complete message.

12. The method of one of the claims 1 to 11, further comprising:
transmitting, by the specific relay UE to the base station, a L2 ID of the next relay UE, based on the RRC setup request message,
wherein the step of performing the RRC reconfiguration comprises:
receiving, by the specific relay UE from the base station, i) information on PC5 Relay RLC channel used for PC5 connection between the next relay UE and the remote UE and ii) information on PC5 Relay RLC channel used for PC5 connection between the specific relay UE and the next relay UE.

13. A specific relay UE (User Equipment), comprising:
a transceiver; and
a processor,
wherein the processor performs operation that is a method of one of the claims 1 to 12.

14. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 12.

15. A non-volatile computer readable storage medium having recorded instructions,
wherein the instructions, based on being executed by one or more processors, cause the one or more processors to perform operation that is a method of one of the claims 1 to 12.
